# EUROPÄISCHE PATENTSCHRIFT

(11) **EP 4 106 987 B1**
(45) Veröffentlichungstag und Bekanntmachung des Hinweises auf die Patenterteilung: **28.08.2024**
(21) Anmeldenummer: 21702497.5
(22) Anmeldetag: 29.01.2021
(51) Int. Cl.: B30B 9/30, A01F 15/04

(54) **PRESSVORRICHTUNG, PRESSSYSTEM UND VERFAHREN ZUM BEREITSTELLEN EINES AUS PFLANZENGUT GEPRESSTEN BALLENS**
PRESSING DEVICE, PRESSING SYSTEM AND METHOD FOR PROVIDING A BALE PRESSED FROM PLANT MATERIAL
ENSEMBLE PRESSE, SYSTÈME DE PRESSE ET PROCÉDÉ POUR PRODUIRE UNE BALLE PAR COMPRESSION DE PRODUITS VÉGÉTAUX

(30) Priorität: 20.02.2020 DE 102020104515
(43) Veröffentlichungstag der Anmeldung: 28.12.2022
(73) Patentinhaber: Dreher, Ingo, 78582 Balgheim (DE)
(72) Erfinder: Dreher, Ingo, 78582 Balgheim (DE)
(74) Vertreter: DTS Patent- und Rechtsanwälte PartmbB
(86) Internationale Anmeldenummer: PCT/EP2021/052207
(87) Internationale Veröffentlichungsnummer: WO 2021/165021

(56) Entgegenhaltungen:
- EP-A2- 2 628 591
- WO-A1-2008/113531
- WO-A1-86/01974
- DE-U1- 202012 010 760
- JP-A- S5 354 536
- US-A- 1 181 497
- US-A- 3 693 541

## Beschreibung

Die vorliegende Erfindung betrifft eine Pressvorrichtung für insbesondere langstängeliges Pflanzengut zum Bereitstellen eines Ballens aus dem Pflanzengut, die eine Presskammer mit einem Pressraum, dem mittels einer Zuführeinrichtung über eine Zuführöffnung Pflanzengut zuführbar ist.

Außerdem betrifft die vorliegende Erfindung ein Presssystem mit einer derartigen Pressvorrichtung.

Ferner betrifft die vorliegende Erfindung ein Verfahren zum Bereitstellen eines Ballens mittels einer Pressvorrichtung.

Eine Pressvorrichtung für langstängeliges Pflanzengut ist in der
WO 2014/067512 A1 beschrieben.

Weitere Pressvorrichtungen für Pflanzengut sind in der US 4,170,934, der
US 4,240,245, der EP 0 803 183 A1, der US 2003/0226336 A1, der
EP 1 606 992 A1 und in der DE 10 2004 027 612 A1 beschrieben. Die
EP 1 120 237 A2 offenbart eine Pressvorrichtung für kurz geschnittenes Fasergut, zum Beispiel Kunststofffasern.

Die US 3,693,541 A beschreibt eine Pressvorrichtung, bei der in einer Presskammer zunächst aus Pressgut ein erster Ballen gepresst wird. Der erste Ballen wird über einen Schieber aus der Presskammer befördert. Vorstehender Vorgang wird für einen oder mehrere Ballten wiederholt. Die Ballen werden übereinander gestapelt und über eine Bindeeinrichtung miteinander verbunden.

Im Hinblick auf eine Verwertung von Pflanzengut als Biomasse ist es von Vorteil, das geerntete Pflanzengut für Transportzwecke und zur Lagerhaltung zu Ballen zu komprimieren. Zu diesem Zweck sind Pressvorrichtungen bekannt, bei denen das lose oder vorverdichtete Pflanzengut in einen Pressraum eingebracht und darin mittels eines Pressorgans komprimiert wird. Der so gebildete Ballen wird dem Pressraum entnommen. Mehrere Ballen können gemeinsam auf einem Fahrzeug zum Verwertungsort transportiert werden. Als Verwertung kommt insbesondere eine Vergasung des Pflanzengutes unter Freisetzung des Energiegehaltes des Pflanzengutes in Frage.

Zu einer derartigen Verwertung können sich unterschiedliche Pflanzen eignen. Hervorzuheben sind allerdings insbesondere Schilfgras (Riesen-Chinaschilf, Miscanthus x giganteus, nachfolgend vereinfacht "Miscanthus") und Mais. Die vorliegende Erfindung ist jedoch nicht auf den Einsatz mit einer dieser Pflanzen beschränkt.

Im Hinblick auf eine Unterteilung des geernteten Pflanzengutes in möglichst gleichartige Transport- und Energieeinheiten schlägt die WO 2014/067512 A1 vor, das Pflanzengut zu Ballen mit im Wesentlichen konstantem Volumen und im Wesentlichen konstanter Dichte zu komprimieren. Hierdurch können gewissermaßen handelbare "Energieeinheiten" in Form von Biomasse bereitgestellt werden.

Insbesondere Miscanthus und Mais weisen die beim Pressvorgang zu meisternde Herausforderung auf, dass sie verhältnismäßig lange und dicke Stängel aufweisen. Im Vergleich zu anderem Pflanzengut, beispielsweise Stroh, sind für den Kompressionsvorgang aus diesem Grund wesentlich höhere Kräfte erforderlich, da die langen Stängel nur schwerer geknickt werden können und sich überdies miteinander verflechten. Höhere Presskräfte erfordern jedoch eine größere Dimensionierung der Pressvorrichtung. Dies steht jedoch dem Wunsch entgegen, die Pressvorrichtung nach Möglichkeit mobil auszugestalten, damit das Pflanzengut am Ernteort, insbesondere auf der landwirtschaftlichen Nutzfläche selbst, komprimiert werden kann und nicht lose zum Pressort transportiert werden muss.

Abgesehen von der in der WO 2014/067512 A1 beschriebenen Pressvorrichtung eignen sich die in den übrigen genannten Veröffentlichungen beschriebenen Pressvorrichtungen nicht zur Kompression von langstängeligem Pflanzengut, insbesondere Miscanthus und Mais, unter Erzielung eines für eine wirtschaftliche Verwertung hinreichenden Kompressionsgrades.

Aufgabe der vorliegenden Erfindung ist es, eine Pressvorrichtung bereitzustellen, die bessere Kompressionseigenschaften für insbesondere langstängeliges Pflanzengut aufweist.

Außerdem ist es Aufgabe der vorliegenden Erfindung, ein Presssystem mit einer Pressvorrichtung und ein Verfahren zum Bereitstellen eines Ballens mit einer Pressvorrichtung bereitzustellen.

Diese Aufgabe wird durch eine Pressvorrichtung gemäss Anspruch 1 und durch ein Verfahren gemäss Anspruch 15 gelöst.

Die vorstehend genannte Aufgabe wird durch eine erfindungsgemäße Pressvorrichtung für insbesondere langstängeliges Pflanzengut zum Bereitstellen eines Ballens aus dem Pflanzengut gelöst, umfassend eine Presskammer mit einem Pressraum, dem mittels einer Zuführeinrichtung über eine Zuführöffnung Pflanzengut zuführbar ist, ein von einer Anfangsstellung in eine Endstellung bewegliches Pressorgan mit einer Antriebseinrichtung zum Komprimieren des Pflanzengutes, und eine Bindeeinrichtung, wobei der Pressraum seitlich durch einen Presskasten begrenzt ist und ein Widerlager den Pressraum begrenzt, gegen das das Pflanzengut bei der Bewegung des Pressorgans zu einem ersten Teilballen komprimierbar ist, wobei ein so bereitgestellter erster Teilballen durch eine Transportöffnung des Pressraumes in einen Folgeraum transportierbar ist, wobei mittels des Pressorgans mindestens ein weiterer Teilballen durch Komprimieren von weiterem in den Pressraum eingebrachten Pflanzengut gegen mindestens ein an der Presskammer angeordnetes Widerlager bereitstellbar ist, wobei die Teilballen über eine Ausgabeöffnung der Presskammer ausgebbar sind, und wobei die zwei oder mehr Teilballen mittels der Bindeeinrichtung zu einem Endballen verbindbar sind.

In die vorliegende Erfindung fließt die Überlegung mit ein, dass die Ballen, die von der Pressvorrichtung ausgegeben werden - vorliegend als "Endballen" bezeichnet -, im Hinblick auf eine wirtschaftliche Verwertung zur Energiegewinnung eine möglichst einheitliche Größe aufweisen sollten, wobei zugleich zur Ausnutzung von Größen- und/oder Gewichtskapazitäten für den Transport eine möglichst hohe Kompression wünschenswert ist. Die vorliegende Erfindung schlägt dementsprechend vor, Endballen durch Verbinden einzelner Teilballen bereitzustellen, die jeweils durch Kompression von Pflanzengut gebildet werden. Eine erste Menge an Pflanzengut wird im Pressraum zu einem ersten Teilballen komprimiert und dieser durch die Transportöffnung in einen Folgeraum der Presskammer transportiert. Anschließend wird mindestens ein weiterer Teilballen komprimiert, und die Teilballen können von der Presskammer über die Ausgabeöffnung ausgegeben werden. Die Teilballen werden durch die Bindeeinrichtung miteinander verbunden, wobei die Bindeeinrichtung vorzugsweise an der Presskammer selbst angeordnet ist, wodurch der gebundene Endballen aus der Presskammer ausgegeben werden kann.

Im Hinblick auf eine möglichst einheitliche Größe der Teilballen ist es von Vorteil, dass die Presskammer einen Presskasten umfasst, der das Pflanzengut seitlich umschließt, wobei vorzugsweise eine Rechteckform vorgesehen ist. Durch Bewegen des Pressorgans von der Anfangsstellung in die Endstellung gegen das Widerlager besteht die Möglichkeit, hinsichtlich der Erstreckung des Teilballens in der Kompressionsrichtung geringe Toleranzen zu erzielen, so dass ein jeweiliger Teilballen mit verhältnismäßig hoher Verdichtung bei zugleich vordefinierten Abmessungen mit geringer Toleranz bereitgestellt werden kann. Zwar könnte die Möglichkeit bestehen, mit einer verhältnismäßig groß dimensionierten Pressvorrichtung einen vergleichbaren Kompressionsgrad bei großen Ballen zu erzielen. Jedoch kann die erfindungsgemäße Pressvorrichtung baulich kompakt gehalten werden, so dass sie sich vorzugsweise zur Montage auf einem Fahrzeug eignet, mit dem eine landwirtschaftliche Nutzfläche direkt befahren werden kann.

Durch Verbinden mehrerer Teilballen zu einem Endballen wird ein im Verhältnis zum Teilballen größerer Endballen bereitgestellt. Dies bietet den Vorteil, dass weniger (End-)Ballen insgesamt bei der Weiterverarbeitung gehandhabt werden müssen, im Vergleich zu einer hohen Anzahl kleinerer Teilballen. Darüber hinaus wird durch Verbinden von zwei oder mehr Teilballen Bindematerial, insbesondere Umreifungsmaterial, eingespart, denn auch einzelne Teilballen müssten gebunden werden, um ein Auseinanderfallen des Pflanzengutes zu verhindern. Die Kosten einzelner Ballen können durch Einsparung von Bindematerial reduziert werden. Gewicht und Raum, das bzw. der durch Einsparung von Bindematerial gewonnen wird, kann zum Vergrößern der Endballen umgesetzt werden, um Transportkapazitäten möglichst optimal auszunutzen.

Die Pressvorrichtung umfasst vorteilhafterweise eine Transporteinrichtung, mit der die Teilballen vom Pressraum in mindestens einen Folgeraum und beispielsweise, sofern vorhanden, die weiteren Folgeräume bis zur Ausgabeöffnung der Presskammer transportierbar sind. Die Transporteinrichtung kann zum Beispiel einen Bandförderer oder einen Kettenförderer umfassen.

Günstig ist es, wenn der Teilballen und der mindestens eine weitere Teilballen vom Pressraum zur Ausgabeöffnung in einer Arbeitsrichtung der Pressvorrichtung transportierbar sind. Die Arbeitsrichtung ist vorzugsweise geradlinig und durch den Presskasten definiert.

Günstig ist es, dass das Widerlager zum Bereitstellen des ersten Teilballens und das mindestens eine weitere Widerlager zum Bereitstellen des mindestens einen weiteren Teilballens voneinander unterschiedliche Widerlager sind, wobei das mindestens eine weitere Widerlager und der Presskasten den Folgeraum begrenzen und das weitere Pflanzengut zur Bildung des mindestens einen weiteren Teilballens gegen den am mindestens einen weiteren Widerlager abgestützten ersten Teilballen komprimierbar ist. Der erste Teilballen kann nach dem Überführen in den Folgeraum an dem weiteren Widerlager anliegen und sich daran abstützen. Der nächste Teilballen wird durch Kompression des Pflanzengutes gegen den ersten Teilballen komprimiert. Dies bietet zum Beispiel den Vorteil, dass der erste Teilballen nochmals mit einer Kompressionskraft beaufschlagt wird, um dessen Formstabilität zu steigern.

Günstig ist es, wenn die Pressvorrichtung zwei oder mehr in einer Arbeitsrichtung der Pressvorrichtung hintereinander angeordnete Folgeräume und zwei oder mehr Widerlager umfasst, wobei ein jeweiliges Widerlager davon den jeweiligen Folgeraum begrenzt, an welchem jeweiligen Widerlager der erste Teilballen bei der Bildung der weiteren Teilballen abstützbar ist und wobei das weitere Pflanzengut im Pressraum gegen den jeweils zuletzt gebildeten Teilballen komprimierbar ist. Nach dem Bilden des zweiten Teilballens, wobei sich der erste Teilballen an dem Widerlager des ersten Folgeraums abstützt, kann der erste Teilballen in einen weiteren Folgeraum transportiert werden und der zweite Teilballen vom Pressraum in den Folgeraum. Der nachfolgende (dritte) Teilballen kann durch Kompression des Pflanzengutes gegen die vorangegangenen Teilballen komprimiert werden. Ein jeweiliger Folgeraum weist ein Widerlager auf, an dem der erste Teilballen anliegen kann, um sich daran abzustützen. Der jeweils zuletzt gebildete Teilballen bildet gewissermaßen das "Widerlager" für die Kompression des nachfolgenden Pflanzengutes.

Die Teilballen können insbesondere aneinander anliegen.

Bevorzugt umfasst die Presskammer den Pressraum als Presskammerabschnitt und einen jeweiligen der vorstehend genannten Folgeräume als weitere dem Pressraum in der Arbeitsrichtung nachfolgende Presskammerabschnitte, wobei an dem in der Arbeitsrichtung letzten Presskammerabschnitt die Ausgabeöffnung der Presskammer für die Teilballen angeordnet ist. Auf diese Weise kann eine kompakte Bauform der Pressvorrichtung erzielt werden. Insbesondere ist die Ausgabeöffnung für den Endballen, bereits gebunden aus den einzelnen Teilballen, vorgesehen.

Bei einer bevorzugten Umsetzung der Pressvorrichtung in der Praxis kann es sich als günstig erweisen, wenn insgesamt fünf Folgeräume vorgesehen sind und der Endballen sechs miteinander verbundene Teilballen umfasst.

Vorgesehen ist günstigerweise, dass das Widerlager am Pressraum eine Zwischenwand zwischen dem Pressraum und dem Folgeraum ist und mittels einer Antriebseinrichtung von einer Schließstellung, in der das Pflanzengut gegen die Zwischenwand komprimierbar ist, in eine Öffnungsstellung, in der der Teilballen in den Folgeraum transportierbar ist, und umgekehrt überführbar ist. Die Zwischenwand kann eine Schließstellung einnehmen, so dass Pflanzengut zum ersten Teilballen gegen die Zwischenwand komprimiert werden kann. Nach dem Überführen in die Öffnungsstellung kann der Teilballen in den Folgeraum transportiert werden.

Günstig kann es sein, wenn das Widerlager zwischen einander benachbarten Folgeräumen jeweils eine Zwischenwand zwischen den Folgeräumen ist und mittels einer Antriebseinrichtung von einer Schließstellung, in der der erste Teilballen gegen die Zwischenwand abstützbar ist, in eine Öffnungsstellung, in der der erste Teilballen in den nächsten Folgeraum transportierbar ist, und umgekehrt überführbar ist. In der Schließstellung kann die jeweilige Zwischenwand das Widerlager für den ersten Teilballen ausbilden. In der Öffnungsstellung kann der Teilballen in den nächsten Folgeraum transportiert werden.

Von Vorteil kann es sein, wenn das Widerlager an dem in der Arbeitsrichtung letzten Folgeraum eine Schließeinrichtung einer hinteren Wand der Presskammer ist und mittels einer Antriebseinrichtung von einer die Ausgabeöffnung der Presskammer verschließenden Schließstellung, in der der erste Teilballen gegen die Schließeinrichtung abstützbar ist, in eine die Ausgabeöffnung freigebenden Öffnungsstellung überführbar ist, in der die Teilballen aus der Presskammer transportierbar sind. Das in Arbeitsrichtung letzte Widerlager wird durch die Schließeinrichtung am letzten Folgeraum gebildet, wenn die Schließeinrichtung die Schließstellung einnimmt. In der Öffnungsstellung können die Teilballen über die so freigegebene Ausgabeöffnung aus der Presskammer ausgegeben werden. Vorteilhafterweise werden die Teilballen zuvor in der Presskammer zum Endballen verbunden.

Die Zwischenwand und die Schließeinrichtung können gewissermaßen als "Schottwände" zwischen dem Pressraum, zwischen den Folgeräumen und am Ausgang der Presskammer angesehen werden, nach deren Öffnen ein jeweiliger Ballentransport ermöglicht wird.

Günstigerweise ist die Zwischenwand oder die Schließeinrichtung als Ganzes oder in einzelnen, jeweils bewegbaren Segmenten quer zur Arbeitsrichtung aus dem Presskasten bewegbar zur Überführung von der Schließstellung in die Öffnungsstellung und umgekehrt. Beispielsweise umfasst die Zwischenwand oder die Schließeinrichtung zwei aufeinander zu in den Presskasten einschiebbare Segmente, die zum Freigeben des Presskastens voneinander weg verschoben werden können.

Von Vorteil ist es, wenn das Widerlager am Pressraum und das mindestens eine weitere Widerlager des mindestens einen Folgeraumes ortsfest an der Pressvorrichtung hinsichtlich einer Bewegung in der Arbeitsrichtung der Pressvorrichtung sind. Dadurch kann eine einfache konstruktive Ausgestaltung der Pressvorrichtung erzielt werden, bei der zur Kompression von Pflanzengut insbesondere nur das Pressorgan in der Arbeitsrichtung der Pressvorrichtung zu bewegen ist.

Vorstehend wurden bevorzugte Ausführungsformen der erfindungsgemäßen Pressvorrichtung vorgestellt, bei denen sich der erste Teilballen jeweils an einem anderen Widerlager abstützt.

Bei einer andersartigen nicht beanspruchten Ausführungsform der Erfindung sind das Widerlager zum Bereitstellen des ersten Teilballens am Pressraum und das mindestens eine Widerlager zum Bereitstellen des mindestens einen weiteren Teilballens identisch, wobei jeder Teilballen durch Kompression des Pflanzengutes im Pressraum gegen dieses Widerlager gebildet und anschließend in den Folgeraum transportiert wird. Jeder Teilballen kann im Pressraum komprimiert und anschließend durch die Transportöffnung in den Folgeraum überführt werden. Dadurch kann zum Beispiel eine verhältnismäßig einfache konstruktive Ausgestaltung der Pressvorrichtung erzielt werden.

Vorgesehen sein kann, dass eine vorgegebene Anzahl von Teilballen im Folgeraum gesammelt und anschließend durch die Ausgabeöffnung ausgegeben wird. Beispielsweise werden die Teilballen als Endballen gebunden durch die Ausgabeöffnung ausgegeben.

Günstig kann es sein, wenn die Pressvorrichtung zwei oder mehr in einer Arbeitsrichtung der Pressvorrichtung hintereinander angeordnete Folgeräume umfasst, die durch Zwischenwände voneinander getrennt sind, wobei nach Bilden eines jeweiligen Teilballens die jeweils nächste Zwischenwand freigegeben wird und die Teilballen in den jeweils nächsten Folgeraum transportierbar sind. Bei dieser Ausführungsform kann das Pflanzengut jeweils gegen das Widerlager im Pressraum komprimiert werden. Sukzessive werden die Teilballen in einen nachfolgenden Folgeraum weiter transportiert, die Schritt für Schritt durch Freigeben der jeweiligen Zwischenwand geöffnet werden können.

Günstig ist es, wenn der Presskasten am Pressraum und am Folgeraum, insbesondere an den zwei oder mehr Folgeräumen, eine identische oder im Wesentlichen identische Querschnittsfläche aufweist. Der Endballen weist dadurch quer zur Längserstreckung, die durch die Verlaufsrichtung des Presskastens definiert ist, verhältnismäßig geringe Maßtoleranzen auf.

Von Vorteil ist es, wenn der Folgeraum, insbesondere die zwei oder mehr Folgeräume, in Arbeitsrichtung der Pressvorrichtung kürzer ausgestaltet ist als der Pressraum. Das bereits zum Teilballen komprimierte Pflanzengut muss nicht weiter komprimiert. Durch Verkürzen des mindestens einen Folgeraums im Verhältnis zum Pressraum kann infolgedessen eine kompakte Bauform der Pressvorrichtung erzielt werden kann.

Die Teilballen im Pressraum werden vorzugsweise mit vorgegebenem oder vorgebbaren Weg des Pressorgans von der Anfangsstellung in die Endstellung gebildet und weisen infolgedessen bevorzugt entlang der Kompressionsrichtung eine einheitliche Länge auf.

Insbesondere werden die Teilballen mit konstantem Volumen gebildet. Hierzu ist wie vorstehend erläutert bevorzugt eine konstante oder im Wesentlichen konstante Querschnittsfläche am Presskasten vorgesehen.

Als vorteilhaft erweist es sich, wenn eine Länge mindestens eines in Arbeitsrichtung auf den Pressraum folgenden Folgeraumes, insbesondere eine Länge eines jeweiligen Folgeraumes, gleich der Länge der Teilballen ist, definiert durch den Bewegungsumfang des Pressorgans von der Anfangsstellung in die Endstellung. Dies erweist sich zum Beispiel als vorteilhaft bei der vorstehend beschriebenen Ausführungsform, bei der sich der erste Teilballen jeweils an dem Widerlager des Folgeraums abstützt und gegen den zuletzt gebildeten Teilballen komprimiert wird. Es kann ein im Wesentlichen gleicher Bewegungsumfang des Pressorgans von der Anfangsstellung in die Endstellung zum Bilden jedes Teilballens eingesetzt werden, wobei die Teilballen zugleich eine im Wesentlichen gleiche Länge aufweisen.

Günstigerweise sind zwei oder mehr Folgeräume vorgesehen, die entlang der der Arbeitsrichtung der Pressvorrichtung gleich lang sind, wobei bevorzugt alle Folgeräume gleich lang sind.

Von Vorteil ist es, wenn die von der Pressvorrichtung gebildeten Endballen Abmessungen aufweisen, die an standardisierte Frachtvorrichtungen angepasst sind. Günstig ist es dabei, wenn die Endballen so gebildet werden, dass die Kapazitäten beispielsweise eines standardisierten Containers oder einer Frachtvorrichtung mit Abmessungen eines derartigen Containers möglichst vollständig ausgenutzt werden können.

Dementsprechend ist es zum Beispiel von Vorteil, wenn der Pressraum in der Endstellung des Pressorgans eine Länge aufweist, die einem ganzzahligen Bruchteil oder ungefähr oder im Wesentlichen einem ganzzahligen Bruchteil eines Innenmaßes eines Containers der ISO-Norm 668 für Container entspricht (d.h. Innenmaß dividiert durch eine ganze Zahl).

In entsprechender Weise ist es von Vorteil, wenn der Presskasten eine Breite und/oder eine Höhe aufweist, die einem ganzzahligen Bruchteil oder ungefähr oder im Wesentlichen einem ganzzahligen Bruchteil eines Innenmaßes eines Containers der ISO-Norm 668 für Container entspricht.

Der Container der beiden zuletzt erwähnten Ausführungsformen kann insbesondere ein 20-Fuß-Container oder ein 40-Fuß-Container der Norm ISO 668 sein.

Idealerweise sind die Endballen in Länge, Breite und/oder Höhe so gebildet, dass ein Innenraum eines Containers gemäß der Norm ISO 668 mit der Mehrzahl von Endballen formschlüssig befüllt werden kann. Zu diesem Zweck ist die Pressvorrichtung so ausgelegt, dass ein jeweiliger ganzzahliger Bruchteil des Innenmaßes in Länge, Breite und/oder Höhe den Abmessungen oder ungefähr oder im Wesentlichen den Abmessungen der Teilballen und/oder des Endballens entspricht.

Als vorteilhaft erweist es sich, wenn der Endballen eine Länge, eine Breite und/oder eine Höhe aufweist, die einem ganzzahligen Bruchteil oder ungefähr oder im Wesentlichen einem ganzzahligen Bruchteil eines Innenmaßes eines Containers der ISO-Norm 668 für Container entspricht, wobei der Container insbesondere ein 20-Fuß-Container oder ein 40-Fuß-Container der Norm ISO 668 ist.

Bei einer bevorzugten Ausführungsform der erfindungsgemäßen Pressvorrichtung kann zum Beispiel ein Endballen von ungefähr 196 cm Länge bereitgestellt werden, gebildet zum Beispiel aus sechs Teilballen mit jeweils ungefähr 33 cm Länge (oder alternativ zum Beispiel drei Teilballen mit jeweils ungefähr 65 cm Länge). Die Breite der Teilballen und des Endballens kann zum Beispiel ungefähr 116 cm betragen, die Höhe beispielsweise ungefähr 79 cm. Dies gibt die Möglichkeit, zum Beispiel einen 20-Fuß-Container der Norm ISO 668 in der Länge mit drei Endballen, der Breite mit zwei Endballen und der Höhe mit drei Endballen zu bestücken, d.h. insgesamt 18 Ballen.

Als vorteilhaft erweist sich eine Pressgenauigkeit in der Länge von 1 % oder weniger, im Hinblick auf eine optimale Ausnutzung der Transportkapazitäten.

Die Antriebseinrichtung für das Pressorgan kann auf unterschiedliche Weisen ausgestaltet sein, zum Beispiel mechanisch, elektrisch, hydraulisch, pneumatisch oder durch eine Kombination von zwei oder mehr der vorstehend genannten Eigenschaften.

Als vorteilhaft erweist es sich, wenn die Antriebseinrichtung mindestens einen Spindelantrieb umfasst, wobei seitlich neben der Zuführöffnung mit dem Pressorgan gekoppelte Spindeln angeordnet sind. Durch die insbesondere elektrisch angetriebenen Spindeln besteht die Möglichkeit, eine wesentlich höhere Verdichtung im Vergleich zu herkömmlichen Pleuelpressen zu erzielen. Während bei herkömmlichen Pressen eine Dichte des Pflanzengutes von beispielsweise ungefähr 200 kg/m³ erzielt werden kann, lässt sich durch Einsatz von Spindelantrieben vorzugsweise eine Dichte von bis zu ungefähr 400 kg/m³ erzielen. Auf diese Weise können zum Beispiel die Kapazitäten in puncto Gewicht handelsüblicher Transportvorrichtungen besser ausgenutzt werden.

Es können zum Beispiel vier Spindeln vorgesehen sein, die neben Eckbereichen der Zuführöffnung mit dem Pressorgan gekoppelt sind. Durch Vorsehen von mehr als einer Spindel, insbesondere vier Spindeln, kann ein Verkanten der Bewegung des Pressorgans vermieden werden. Die Spindeln können einen jeweiligen eigenen Antrieb aufweisen oder gemeinsam angetrieben sein.

Von Vorteil ist es, wenn die Presskammer eine Frontwand umfasst, in der die Zuführöffnung gebildet ist und die das Pressorgan umfasst oder ausbildet, wobei eine Schließeinrichtung vorgesehen ist, die mittels einer Antriebseinrichtung in eine Öffnungsstellung überführbar ist, zum Zuführen des Pflanzengutes in den Pressraum, und die in einer Schließstellung die Zuführöffnung verschließt, und wenn die Frontwand mittels der Antriebseinrichtung zum Komprimieren des Pflanzengutes bewegbar ist. Bei geöffneter Schließeinrichtung kann das zu komprimierende Pflanzengut in den Pressraum eingebracht werden. Nimmt die Schließeinrichtung die Schließstellung ein, wird die Frontwand bewegt und das Pflanzengut im Pressraum komprimiert. Auf diese Weise kann eine konstruktiv einfache Ausgestaltung der Pressvorrichtung erzielt werden.

Die Schließeinrichtung kann ganz oder in einzelnen, jeweils bewegbaren Segmenten quer zur Arbeitsrichtung bewegbar sein, zur Überführung von der Schließstellung in die Öffnungsstellung und umgekehrt. Beispielsweise sind zwei Segmente vorgesehen, die zum Verschließen der Zuführöffnung aufeinander zu bewegbar sind und die zum Freigeben der Zuführöffnungen in voneinander weg weisende Richtungen bewegt werden können.

Die Bindeeinrichtung kann bei einer bevorzugten Ausführungsform eine Umreifungseinrichtung sein. Insbesondere können sämtliche Teilballen gemeinsam mit einer sie umfassenden Umreifung versehen sein.

Vorteilhaft ist es, wenn die Bindeeinrichtung an der Presskammer angeordnet ist und wenn der Endballen durch Binden der Teilballen in der Presskammer bereitstellbar ist. Dies gibt die Möglichkeit, die Teilballen bereits in der Presskammer miteinander zu verbinden und von der Pressvorrichtung lediglich gebundene Endballen auszugeben, die einfacher gehandhabt werden können als die Teilballen.

Die Bindeeinrichtung umfasst vorteilhafterweise eine erste Bindeeinheit und eine zweite Bindeeinheit, die von einander gegenüberliegen Seiten in den Presskasten einführbar sind. Hierbei ist bevorzugt über jede Bindeeinheit mindestens ein Strang oder Band bereitstellbar, und die Stränge oder Bänder verschiedener Bindeeinheiten werden den Endballen umgreifend miteinander verbunden. Beispielsweise werden die Stränge oder Bänder quer zur Arbeitsrichtung in den Presskasten eingeführt und aneinander angelegt, bevor sie kraft- und/oder formschlüssig miteinander verbunden werden.

Die Bänder sind beispielsweise Metallbänder, die durch Kraft-und/oder Formschluss miteinander verbindbar sind. Mögliche Verbindungstechniken sind zum Beispiel Durchsetzfügen oder Clinchen ("Toxen"). Der Einsatz von Metallbändern erlaubt es, die Endballen mit einer höheren Festigkeit zu binden als zum Beispiel mit herkömmlichem Pressengarn. Eine Länge der Endballen durch Ausdehnung des Pflanzengutes wird vermieden, wodurch die Endballen eine hohe Formstabilität aufweisen.

Es versteht sich, dass die Pressvorrichtung vorteilhafterweise eine Steuereinrichtung umfasst, mit der die aktiven Komponenten der Pressvorrichtung angesteuert werden können. Hierzu zählen insbesondere die Antriebseinrichtung für das Pressorgan, etwaige Antriebseinrichtungen für die Zwischenwand, die Zwischenwände oder die Schließeinrichtung, für die Schließeinrichtung an der Zuführöffnung, die Transporteinrichtung oder die Zuführeinrichtung. Günstigerweise sind mittels der Steuereinrichtung auch die aktiven Komponenten der nachfolgend erwähnten Presssysteme ansteuerbar.

Wie bereits erwähnt, betrifft die Erfindung auch ein Presssystem. Ein erfindungsgemäßes, die eingangs genannte Aufgabe lösendes Presssystem umfasst eine Pressvorrichtung der vorstehend genannten Art und eine der Pressvorrichtung in der Arbeitsrichtung vorgelagerte Portionierungseinrichtung, über welche der Pressvorrichtung eine vorportionierte Menge an Pflanzengut zum Bilden eines jeweiligen Teilballens bereitstellbar ist.

Die Portionierungseinrichtung ermöglicht es insbesondere, eine Schnittstelle zwischen einer kontinuierlich durchführbaren Ernte des Pflanzengutes und einer diskontinuierlich arbeitenden Pressvorrichtung bereitzustellen. Das Pflanzengut wird in vorportionierten Mengen gesammelt und bereitgestellt und kann dem Pressraum über die Zuführeinrichtung zur Bildung eines jeweiligen Teilballens zugeführt werden.

Von Vorteil ist es, wenn die vorportionierte Menge an Pflanzengut hinsichtlich ihres Volumens und/oder ihres Gewichtes vorgebbar ist. Beispielsweise kann vorgesehen sein, dass die vorportionierte Menge so bemessen ist, dass sie den Pressraum im Wesentlichen ausfüllt. Alternativ oder ergänzend kann vorgesehen sein, dass eine hinsichtlich ihres Gewichts bestimmbare Menge an Pflanzengut in den Pressraum eingeführt wird, beispielsweise zum Bilden von Teilballen mit identischem Gewicht.

Günstig ist es, wenn die Portionierungseinrichtung eine Kompressionseinheit umfasst zur Vorkompression der vorportionierten Menge an Pflanzengut, insbesondere in Form eines Vorballens. Das lose Pflanzengut kann in einen Vorballen vorkomprimiert werden. Der Vorballen kann zum Beispiel so bemessen sein, dass er den Pressraum vor der Kompression vollständig oder im Wesentlichen vollständig ausfüllt.

Günstig ist es, wenn das Presssystem mindestens eine Sensoreinrichtung umfasst, mit der eine Masse der vorportionierten Menge an Pflanzengut vor dem Einbringen in den Pressraum und insbesondere vor einer Vorkompression ermittelbar ist. Beispielsweise wird eine vordefinierte Masse an Pflanzengut der Kompressionseinheit zugeführt, um bevorzugt einen Vorballen vordefinierten Gewichts bereitzustellen.

Das Presssystem kann mindestens eine Sensoreinrichtung umfassen, mit der eine Masse eines gebildeten Teilballens in der Presskammer ermittelbar sein kann. Auf diese Weise kann die Masse eines jeweiligen Teilballens im Hinblick auf eine Prozesskontrolle überprüft werden.

Die Portionierungseinrichtung ist vorteilhafterweise abhängig von der ermittelten Masse des Teilballens zum Bereitstellen der vorportionierten Menge an Pflanzengut ansteuerbar. Dies gibt zum Beispiel die Möglichkeit, beim Endballen eine vorgegebene oder vorgebbare durchschnittliche Dichte zu erzielen. So könnte es sein, dass ein Teilballen zum Beispiel eine zu hohe oder eine zu geringe Masse aufweist. Beim Bereitstellen weiteren Pflanzengutes kann die vorportionierte Menge hinsichtlich ihrer Masse verringert bzw. gesteigert werden, so dass die Abweichung der Masse des Teilballens von der Zielmasse kompensiert werden kann und insgesamt eine durchschnittliche Dichte aller Endballen erzielt werden kann.

Ein andersartiges, die eingangs genannte Aufgabe erfindungsgemäßes Presssystem umfasst eine Pressvorrichtung der vorstehend genannten Art und ein Fahrzeug zum Verfahren auf einer landwirtschaftlichen Nutzfläche, wobei das Fahrzeug eine Trageinrichtung umfasst, auf der die Pressvorrichtung angeordnet ist. Die im Zusammenhang mit dem voranstehend erläuterten Presssystem beschriebenen Merkmale können bei diesem Presssystem ebenfalls umgesetzt sein und umgekehrt.

Über das Fahrzeug kann die Pressvorrichtung mobil auf der landwirtschaftlichen Nutzfläche eingesetzt und so die Verarbeitung des Pflanzengutes erleichtert werden.

Das Fahrzeug weist vorteilhafterweise einen Fahrantrieb auf.

Insbesondere kann das Fahrzeug selbstfahrend und selbstlenkend ausgestaltet sein. Landwirtschaftliche Nutzflächen können vom Fahrzeug autonom befahren werden. Darauf enthaltenes Pflanzengut, lose oder vorportioniert, insbesondere vorkomprimiert, kann aufgenommen und zu Endballen verpresst ausgegeben werden.

Die erfindungsgemäßen Presssysteme weisen diejenigen Vorteile auf, die bereits im Zusammenhang mit der Erläuterung der erfindungsgemäßen Pressvorrichtung erwähnt wurden. Vorteilhafte Ausführungsformen der Presssysteme ergeben sich durch vorteilhafte Ausführungsformen der erfindungsgemäßen Pressvorrichtung.

Wie eingangs erwähnt, betrifft die vorliegende Erfindung auch ein Verfahren.

Ein erfindungsgemäßes, die eingangs genannte Aufgabe lösendes Verfahren zum Bereitstellen eines Endballens mit einer Pressvorrichtung der vorstehend genannten Art, ist durch die folgenden Schritte gekennzeichnet:
- Komprimieren von Pflanzengut zur Ausbildung eines ersten Teilballens;
- Komprimieren von Pflanzengut zur Ausbildung mindestens eines weiteren Teilballens;
- Verbinden der Teilballen miteinander zur Ausbildung eines Endballens.

Die im Zusammenhang mit der Erläuterung der erfindungsgemäßen Pressvorrichtung erwähnten Vorteile können durch Ausübung des Verfahrens erzielt werden. Insbesondere ergeben sich vorteilhafte Ausführungsbeispiele des Verfahrens durch vorteilhafte Ausführungsformen der erfindungsgemäßen Pressvorrichtung und/oder der erfindungsgemäßen Presssysteme.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung einer bevorzugten Ausführungsform eines erfindungsgemäßen Presssystems, umfassend eine bevorzugte Ausführungsform der erfindungsgemäßen Pressvorrichtung, zur Durchführung eines bevorzugten Ausführungsbeispiels des erfindungsgemäßen Verfahrens;
- Figur 2:: eine schematische Darstellung der Pressvorrichtung aus Figur 1 in einer Draufsicht, wobei mit der Pressvorrichtung Vorballen zu Teilballen komprimierbar und diese zu einem Endballen verbindbar sind;
- Figuren 3 bis 11:: die Pressvorrichtung aus Figur 2 zu aufeinanderfolgenden Zeitpunkten beim Erstellen mehrerer Teilballen und eines Endballens;
- Figur 12:: eine Ansicht längs der Linie 12-12 in Figur 4;
- Figuren 13 und 14:: eine Ansicht ähnlich Figur 2 einer bevorzugten Ausführungsform einer nicht beanspruchten Pressvorrichtung zu aufeinanderfolgenden Zeitpunkten; und
- Figuren 15 und 16:: eine weitere schematische Darstellung einer bevorzugten Ausführungsform einer nicht beanspruchten Pressvorrichtung zu aufeinanderfolgenden Zeitpunkten.

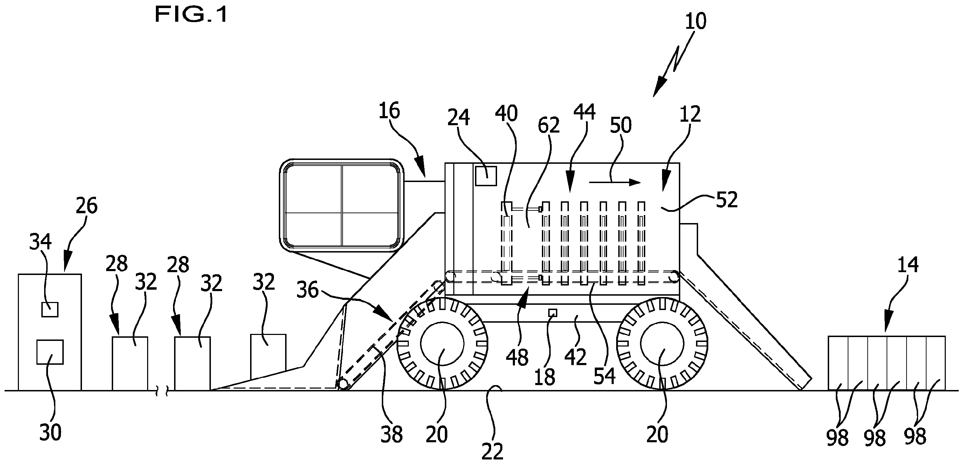

Figur 1 zeigt eine insgesamt mit dem Bezugszeichen 10 belegte vorteilhafte Ausführungsform eines erfindungsgemäßen Presssystems. Das Presssystem 10 umfasst insbesondere eine mit dem Bezugszeichen 12 belegte vorteilhafte Ausführungsform der erfindungsgemäßen Pressvorrichtung.

Die Pressvorrichtung 12 dient dazu, Pflanzengut zu komprimieren und für den nachfolgenden Transport vorteilhaft konfektionierte Ballen bereitzustellen, nachfolgend als Endballen 14 bezeichnet.

Bei dem Pflanzengut handelt es sich insbesondere um als Biomasse verwertbare Pflanzen mit hohem Energiegehalt, zum Beispiel Miscanthus x giganteus ("Miscanthus") oder Mais. Diese Pflanzen sind als langstängelig bekannt und weisen verhältnismäßig lange und dicke Stängel auf. Aus diesem Grund bestehen hohe Anforderungen an die Pressvorrichtung 12, um Endballen 14 mit möglichst hoher Dichte bei zugleich möglichst einheitlichen Abmessungen mit geringen Toleranzen zur bestmöglichen Ausnutzung von Transport- und Lagerkapazitäten bereitzustellen.

Das Presssystem 10 umfasst ein Fahrzeug 16 mit einem Fahrantrieb 18 zum Antreiben von Rädern 20. Das Fahrzeug 16 ist so beschaffen, dass es auf einer landwirtschaftlichen Nutzfläche 22 verfahren werden kann. Die Nutzfläche 22 kann insbesondere das Feld selbst sein, auf dem die zu Endballen 14 verarbeiteten Pflanzen kultiviert werden.

Das Fahrzeug 16 kann von einer Bedienperson geführt sein. Alternativ oder ergänzend kann vorgesehen sein, dass das Fahrzeug 16 selbstfahrend und selbstlenkend ausgestaltet ist und autonom über die Nutzfläche 22 verfahren werden kann.

Die Pressvorrichtung 12 kann ebenfalls autonom ausgestaltet sein. Insbesondere können sämtliche Vorgänge des Presssystems 10 und damit auch der Pressvorrichtung 12 mittels einer Steuereinrichtung 24 gesteuert werden.

Das von der Nutzfläche 22 geerntete Pflanzengut wird vor Zufuhr in die Pressvorrichtung 12 mittels einer Portionierungseinrichtung 26 des Presssystems 10 vorportioniert. Die Portionierungseinrichtung 26 stellt eine vorportionierte Menge 28 an Pflanzengut bereit. Zu diesem Zweck umfasst die Portionierungseinrichtung 26 eine Kompressionseinheit 30. Mit der Kompressionseinheit 30 wird das Pflanzengut vorkomprimiert und in Form eines Vorballens 32 bereitgestellt.

Die Portionierungseinrichtung 26 ist insbesondere so beschaffen, dass vorzugsweise ein Vorballen 32 vordefinierter Abmessungen und/oder ein Vorballen 32 mit vorgegebener Masse bereitgestellt wird. Zur Kontrolle der Masse kann die Portionierungseinrichtung 26 eine Sensoreinrichtung 34 umfassen, die die Ermittlung der Masse des eingezogenen Pflanzenguts ermöglicht, die zu einem Vorballen 32 verarbeitet wird.

Vorgesehen sein kann, dass die Portionierungseinrichtung 26 Bestandteil eines in der Zeichnung nicht dargestellten Fahrzeugs ist, das dem Fahrzeug 16 in einer Arbeitsrichtung vorausfährt.

Die auf der Nutzfläche 22 abgelegten Vorballen 32 können mittels einer Zuführeinrichtung 36 des Presssystems 10 von der Nutzfläche 22 aufgenommen werden. Dabei werden die Vorballen 32 angehoben und über eine Transportbahn 38 in Richtung einer Zuführöffnung 40 der Pressvorrichtung 12 transportiert. Die Transportbahn 38 umfasst zum Beispiel einen Bandförderer.

Die Pressvorrichtung 12 selbst ist auf einer Trageinrichtung 42 des Fahrzeugs 16 positioniert.

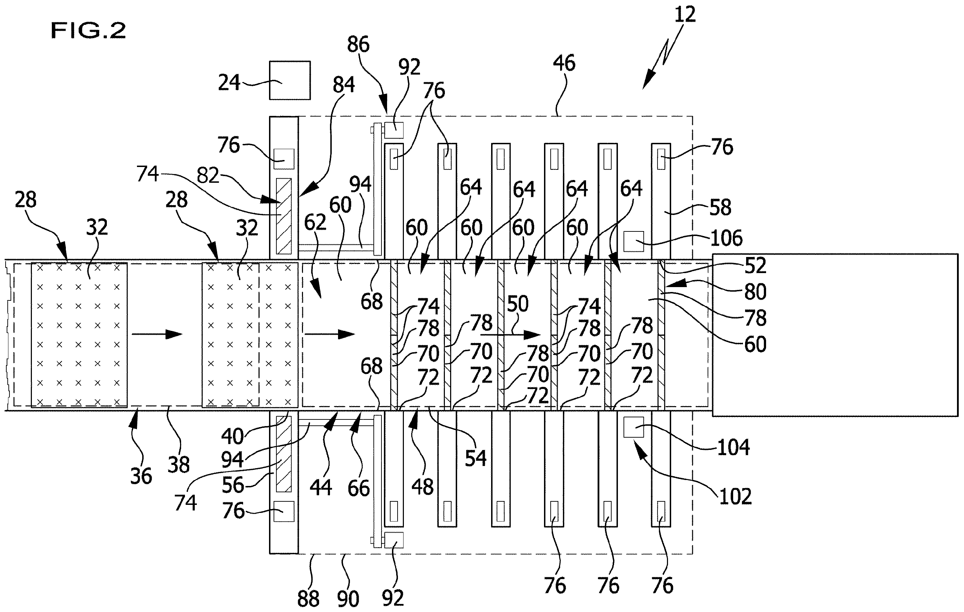

Wie insbesondere aus Figur 2 hervorgeht, umfasst die Pressvorrichtung 12 eine Presskammer 44, die beispielsweise von einem in Figur 2 dargestellten Gehäuse 46 umgeben sein kann. In der Presskammer 44 ist eine Transporteinrichtung 48 angeordnet, um den Transport der Vorballen 32, der Teilballen und des Endballens 14 entlang einer Arbeitsrichtung 50 der Pressvorrichtung 12 zu ermöglichen. Die Arbeitsrichtung 50 ist geradlinig erstreckt ausgebildet von der Zuführöffnung 40 zu einer Ausgabeöffnung 52 der Presskammer 44. Beispielsweise umfasst die Transporteinrichtung 48 eine Transportbahn 54, zum Beispiel mit einem Bandförderer.

Die Presskammer 44 weist eine Frontwand 56 auf, in der die Zuführöffnung 40 gebildet ist, und eine hintere Wand 58, in der die Ausgabeöffnung 52 gebildet ist.

Die Presskammer 44 umfasst eine Mehrzahl von in der Arbeitsrichtung 50 hintereinander angeordneten, aufeinanderfolgende Presskammerabschnitte 60. In Zuführrichtung der Vorballen 32 wird ein erster Presskammerabschnitt 60 durch einen Pressraum 62 gebildet. An den Pressraum 62 schließen sich Folgeräume 64 an, die jeweils einen Presskammerabschnitt 60 bilden. Im vorliegenden Fall sind fünf Folgeräume 64 und damit sechs Presskammerabschnitte 60 vorhanden.

Die Presskammer 44 weist einen Presskasten 66 auf, der sich von der Frontwand 56 zur hinteren Wand 58 erstreckt. An einer unteren Seite ist der Presskasten 66 durch die Transporteinrichtung 48 begrenzt. Seitlich, quer zur Arbeitsrichtung 50 und nach oben ist der Presskasten 66 durch eine Begrenzung 68 begrenzt. Bei der Begrenzung 68 kann es sich um eine Wandung handeln. Denkbar ist jedoch insbesondere, dass die Begrenzung 68 durch voneinander einen Abstand aufweisende Profile oder dergleichen gebildet wird, die eine Kompression der Vorballen 32 erlauben, ohne dass Pflanzengut aus dem Presskasten 66 austritt.

Im Presskasten 66 sind Zwischenwände 70 angeordnet, die den Pressraum 62 und die Folgeräume 64 voneinander trennen. Eine erste Zwischenwand 70 trennt den Pressraum 62 vom ersten Folgeraum 64. Zwischen einander benachbarten Folgeräumen 64 ist jeweils eine weitere Zwischenwand 70 angeordnet.

Mit einer jeweiligen Zwischenwand 70 ist eine jeweilige Transportöffnung 72 zwischen dem Pressraum 62 und dem ersten Folgeraum 64 bzw. zwischen benachbarten Folgeräumen 64 wahlweise freigebbar und verschließbar.

Im vorliegenden Beispiel umfasst jede Zwischenwand 70 zwei Segmente 74, die quer zur Arbeitsrichtung 50 aufeinander zu in den Presskasten 66 eingeschoben werden können. Aneinander anliegend verschließen die Segmente 74 den Presskasten 66 im Bereich der jeweiligen Transportöffnung 72.

Umgekehrt können die Segmente 74 in voneinander weg weisende Richtungen quer zur Arbeitsrichtung 50 aus dem Presskasten 66 verschoben werden, so dass die jeweilige Transportöffnung 72 freigegeben ist und ein Transport von Teilballen vom Pressraum 62 in den ersten Folgeraum 64 oder zwischen Folgeräumen 64 möglich ist.

Zum Bewegen der jeweiligen Segmente 74 sind Antriebseinrichtungen 76 vorgesehen.

In einer jeweiligen Schließstellung kann die jeweilige Zwischenwand 70 als Widerlager 78 bei der Kompression von Pflanzengut dienen, worauf nachfolgend noch eingegangen wird.

In ähnlicher Weise ist in der Ausgabeöffnung 52 der hinteren Wand 58 eine Schließeinrichtung 80 vorgesehen, mit der die Ausgabeöffnung 52 in einer Schließstellung verschlossen und in einer Öffnungsstellung freigegeben ist. Die Schließeinrichtung 80 umfasst zwei Segmente 74, die mittels einer Antriebseinrichtung 76 zum Verschließen der Presskammer 44 aufeinander zu verschoben werden können. Umgekehrt können die Segmente 74 voneinander weg zur Freigabe der Ausgabeöffnung 52 aus dem Presskasten 66 verschoben werden. Die Schließeinrichtung 80 bildet ein Widerlager 78, das den letzten Folgeraum 64 begrenzt.

An der Zuführöffnung 40 ist eine Schließeinrichtung 82 vorgesehen. Mit der Schließeinrichtung 82 kann die Zuführöffnung 40 in einer Schließstellung verschlossen werden. In einer Öffnungsstellung ist die Zuführöffnung 40 freigegeben. Die Schließeinrichtung 82 umfasst ebenfalls Segmente 74, die quer zur Arbeitsrichtung 50 aufeinander zu verschoben werden können, um die Schließstellung einzunehmen. Umgekehrt können die Segmente 74 in voneinander weg weisende Richtungen verschoben werden, um die Zuführöffnung 40 freizugeben und dadurch die Presskammer 44 und insbesondere den Pressraum 62 zu öffnen.

Die Pressvorrichtung 12 umfasst ein Pressorgan 84. Das Pressorgan 84 wird im vorliegenden Fall von der Frontwand 56 einschließlich der davon umfassten Schließeinrichtung 82 gebildet. Das Pressorgan 84 kann mittels Antriebseinrichtungen 86 in der Arbeitsrichtung 50 und in entgegengesetzter Richtung bewegt werden. Zur Kompression von Vorballen 32 wird das Pressorgan 84 von einer Anfangsstellung 88 bis in eine Endstellung 90 bewegt. Dadurch wird der Pressraum 62 verkleinert. Im Pressraum 62 enthaltene Vorballen 32 werden zu einem Teilballen komprimiert.

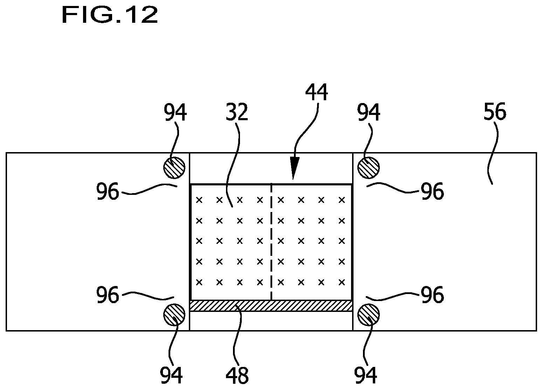

Vorliegend sind vier Antriebseinrichtungen 86 vorgesehen. Die Antriebseinrichtungen 86 umfassen jeweils ein Antriebsorgan 92 und Spindelantriebe 94. Ein jeweiliger Spindelantrieb 94 ist an einem Eckbereich 96 der Zuführöffnung 40 angeordnet (Figur 12). Die Antriebsorgane 92 sind so miteinander synchronisiert, dass sie gemeinsam aktivierbar und deaktivierbar sind. Beim Verschieben des Pressorgans 84 kann auf diese Weise eine verkantungsfreie Bewegung im Hinblick auf eine optimale Kompression des Vorballens 32 erzielt werden. Es versteht sich, dass die Pressvorrichtung 12 für das Pressorgan 84 eine in der Zeichnung nicht dargestellte Führungseinrichtung umfassen kann.

Der Einsatz von Spindelantrieben 94 bietet bei der Pressvorrichtung 12 die Möglichkeit, einen Kompressionsgrad für das Pflanzengut zu erzielen, der den mit herkömmlichen Pressen, insbesondere Kolbenpressen, erzielbaren Kompressionsgrad erheblich übersteigt. Denkbar sind beispielsweise Dichten der Endballen 14 von bis zu ungefähr 400 kg/m³.

Bei der Pressvorrichtung 12 besteht darüber hinaus der Vorteil, dass durch Ausgestaltung des Pressorgans 84 und Einsatz der Spindelantriebe 94 und unter Verpressen der Vorballen 32 Teilballen 98 mit vordefinierter Länge gepresst werden können, die nur eine geringe Toleranz aufweisen. Im Vergleich zu herkömmlichen Kolbenpressen kann eine wesentlich höhere Genauigkeit beim Pressen von Ballen erzielt werden.

Dementsprechend ist es von Vorteil, wenn bei der Pressvorrichtung 12 die Anfangsstellung 88 und die Endstellung 90 vorgegeben sind, so dass Teilballen 98 mit im Wesentlichen identischer Länge gepresst werden können. Dementsprechend können sich Endballen 14 je nach Beschaffenheit - beispielsweise Feuchte - des zugeführten Pflanzengutes zum Beispiel hinsichtlich ihres Gewichtes und ihrer durchschnittlichen Dichte unterscheiden.

Um sicherzustellen, dass der Endballen 14 möglichst geringe Maßtoleranzen umfasst, weist der Presskasten 66 über die gesamte Länge einen im Wesentlichen identischen Querschnitt auf. Insbesondere stimmt die Querschnittsfläche des Pressraums 62 mit der Querschnittsfläche der Folgeräume 64 überein.

Die Folgeräume 64 sind entlang der Arbeitsrichtung 50 von identischer Länge. Die Länge des Pressraums 62, bei Einnahme der Endstellung 90 durch das Pressorgan 84, stimmt dabei mit einer Länge der Folgeräume 64 überein.

Die Länge des Pressraums 62, bei Einnahme der Anfangsstellung 88 durch das Pressorgan 84, stimmt vorzugsweise mit einer Länge der Vorballen 32 entlang der Arbeitsrichtung 50 überein.

Die Länge des jeweiligen Folgeraumes 64 und des Pressraumes 62, in der Endstellung 90 des Pressorgans 84, entspricht vorzugsweise einem geradzahligen Bruchteil eines Innenmaßes eines Containers nach der Norm ISO 668, insbesondere eines 20-Fuß-Containers. Beispielsweise weist ein so gebildeter Teilballen 98 eine Länge von ungefähr 33 cm auf. Ein Endballen 14 umfassend sechs Teilballen 98 weist eine Länge von ungefähr 196 cm auf, dies entspricht ungefähr einem Drittel des Innenmaßes des 20-Fuß-Containers.

Eine Breite und/oder eine Höhe des Presskastens 66, bezogen auf dessen Innenmaß, entspricht vorzugsweise ebenfalls einem geradzahligen Bruchteil eines Containers gemäß der Norm ISO 668, speziell des 20-Fuß-Containers.

Beispielsweise weist der Presskasten 66 in der Breite ein Innenmaß von ungefähr 116 cm auf, so dass diese Breite auch derjenigen des Endballens 14 entspricht. Dies entspricht ungefähr der halben Breite eines Innenmaßes des Containers.

Beispielsweise weist der Presskasten 66 in der Höhe ein Innenmaß von ungefähr 79 cm auf. Dies entspricht der Höhe des Endballens 14. Die Höhe des Endballens 14 entspricht somit ungefähr einem Drittel des Innenmaßes des Containers in der Höhe.

Im Ergebnis kann mit der Pressvorrichtung 12 vorteilhafterweise ein Endballen 14 bereitgestellt werden, der in drei Raumrichtungen so bemessen ist, dass eine Mehrzahl von Endballen 14 formschlüssig in einem standardisierten ISO 668-konformen Container angeordnet werden kann und vorhandene und standardisierte Transportkapazitäten möglichst optimal ausgenutzt werden.

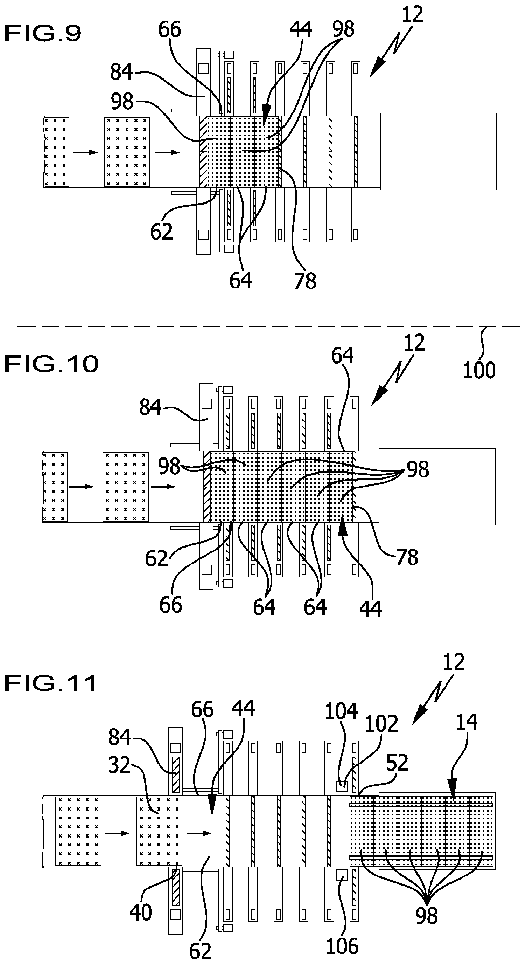

Nachfolgend wird eine bevorzugte Betriebsweise der Pressvorrichtung 12 unter Verweis auf die Figuren 2 bis 11 beschrieben, auch im Hinblick auf ein bevorzugtes Ausführungsbeispiel des erfindungsgemäßen Verfahrens. Die Figuren 2 bis 11 zeigen nacheinander ausgeführte Arbeitsschritte, die mit der Pressvorrichtung 12 durchgeführt werden. Die gestrichelte Linie 100 zwischen den Figuren 9 und 10 symbolisiert, dass insbesondere zwischen diesen beiden Figuren einige der Arbeitsschritte zwar ausgeführt werden, aber nicht dargestellt sind.

Zunächst ist die Zuführöffnung 40 bei geöffneter Schließeinrichtung 82 freigegeben, um einen ersten Vorballen 32 zuzuführen. Die Zwischenwände 70 und die Schließeinrichtung 80 sind vorzugsweise geschlossen (Figur 2).

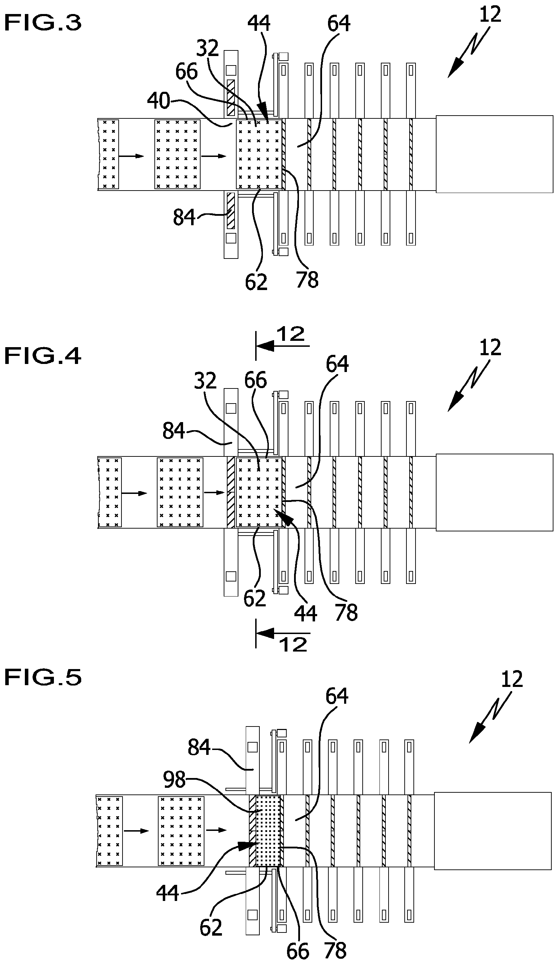

Nach dem Einführen des ersten Vorballens 32 wird die Schließeinrichtung 82 zum Verschließen des Pressraums 62 geschlossen. Das Pressorgan 84 nimmt die Anfangsstellung 88 ein (Figuren 3 und 4).

Anschließend wird die Antriebseinrichtung 86 zum Verschieben des Pressorgans 84 von der Anfangsstellung 88 in die Endstellung 90 aktiviert. Dabei wird der Pressraum 62 verkleinert. Der Vorballen 32 wird gegen das erste Widerlager 78 zu einem Teilballen 98 komprimiert. Das Widerlager 78 ist in diesem Fall die erste Zwischenwand 70.

Das Pflanzengut wird dabei hochverdichtet. Der Teilballen 98 kann eine mittlere Dichte von bis zu ungefähr 400 kg/m³ aufweisen. Die Länge beträgt vorzugsweise ungefähr 33 cm. Die Breite beträgt vorzugsweise ungefähr 116 cm. Die Höhe beträgt vorzugsweise ungefähr 79 cm.

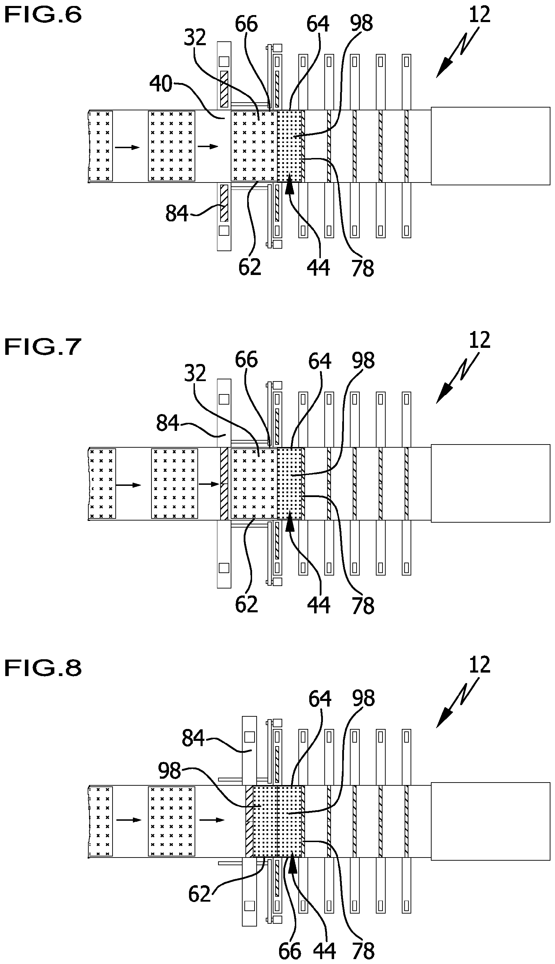

Anschließend wird die erste Zwischenwand 70 vom Pressraum 62 in den ersten Folgeraum 64 geöffnet und der erste Teilballen 98 durch die Transportöffnung 72 in den ersten Folgeraum 64 transportiert. Gleichzeitig kann vorzugsweise der nächste Vorballen 32 zugeführt werden (Figur 6).

Bei dem nachfolgenden Pressvorgang zum Bilden des zweiten Teilballens 98 wird die Zwischenwand 70 zwischen dem ersten und dem zweiten Folgeraum 64 als Widerlager 78 genutzt. Der zweite Vorballen 32 wird gegen den ersten Teilballen 98 komprimiert (Figuren 7 und 8).

Dies hat beispielsweise den Vorteil, dass, sollte sich der erste Teilballen 98 aufgeweitet haben, dieser nachkomprimiert wird. Außerdem kann bereits eine Verbindung der Teilballen 98 zum Beispiel durch Verflechtung des Pflanzengutes erfolgen.

Figur 9 zeigt die Kompression des dritten Teilballens 98 und entspricht der Darstellung der Figur 8 nach einem weiteren Kompressionsvorgang.

In entsprechender Weise zeigt Figur 10 die Kompression des sechsten Teilballens 98.

Zu erkennen ist jeweils, dass als Widerlager 78 jeweils eine andere der Zwischenwände 70 verwendet wird. Nach einem Kompressionsvorgang wird diese Zwischenwand 70 geöffnet. Die Teilballen 98 werden in den jeweils nächsten Folgeraum 64 transportiert, wobei der zuletzt komprimierte Teilballen 98 vom Pressraum 62 in den ersten Folgeraum 64 transportiert wird.

Abweichend von dem Gesagten dient für die Kompression des letzten Teilballens 98 die Schließeinrichtung 80 in der hinteren Wand 58 als Widerlager 78 (Figur 10). Jedoch gilt auch für diesen Fall, dass der erste Teilballen 98 am Widerlager 78 anliegt. Die jeweils bereitgestellten Teilballen 98 liegen aneinander an, und der jeweilige Vorballen 32 wird gegen den zuletzt gebildeten Teilballen 98 komprimiert.

Die Teilballen 98 haften zum Beispiel durch Verflechtung des Pflanzengutes bereits ohne zusätzliche Bindung aneinander an. Von Vorteil ist es jedoch, dass die Pressvorrichtung 12 eine Bindeeinrichtung 102 umfasst. Die Bindeeinrichtung 102 umfasst eine erste Bindeeinheit 104 und eine zweite Bindeeinheit 106. Die Bindeeinheiten 104, 106 sind in den Figuren 2 und 11 schematisch dargestellt.

Die Bindeeinrichtung 102 ist insbesondere eine Umreifungseinrichtung, um die sechs Teilballen 98 zu umreifen. Günstig ist es, dass die Bindeeinrichtung 102 an der Presskammer 44 angeordnet ist. Dies gibt die Möglichkeit, die Teilballen 98 zu dem Endballen 14 bereits in der Presskammer 44 zu verbinden, noch bevor der Endballen 14 über die Ausgabeöffnung 52 aus der Presskammer 44 ausgegeben wird.

Die Bindeeinheiten 104, 106 sind zum Beispiel an einander gegenüberliegenden Seiten des Presskastens 66 angeordnet. Nach dem Pressen des letzten Teilballens 98 können die Bindeeinheiten 104, 106 zum Beispiel quer zur Arbeitsrichtung 50 in den Presskasten 66 eingeführt werden.

Als Bindematerial kommen insbesondere Bänder aus Metall zum Einsatz, beispielsweise Stahlbänder. Günstigerweise werden die Bänder beider Bindeeinheiten 104, 106 so zugeführt, dass sie die Teilballen 98 umfassen. Die Bänder können durch Kraft- und/oder Formschluss miteinander verbunden werden, zum Beispiel mittels Durchsetzfügen oder Clinchen.

Nach dem Binden wird der gebundene Endballen 14 über die Ausgabeöffnung 52 aus der Presskammer 44 ausgegeben (Figur 11).

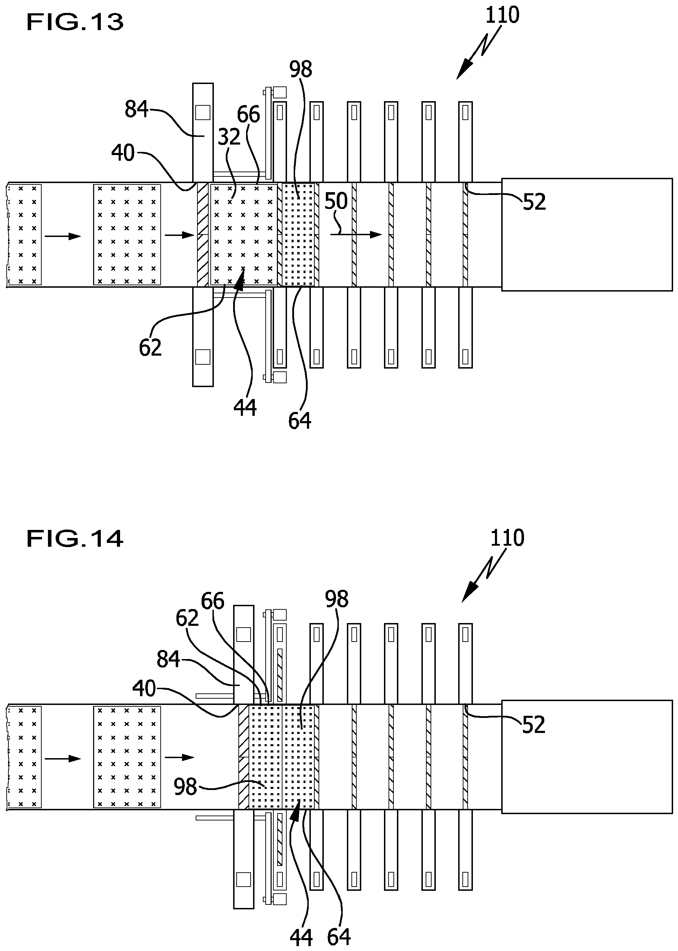

Nachfolgend wird auf in den Figuren 13 und 14 einerseits sowie 15 und 16 andererseits schematisch dargestellte und mit den Bezugszeichen 110 bzw. 130 belegte vorteilhafte Ausführungsformen nicht beanspruchter Pressvorrichtungen eingegangen. Die Pressvorrichtungen 110, 130 können anstelle der Pressvorrichtung 12 bei dem Presssystem 10 zum Einsatz kommen.

Die mit der Pressvorrichtung 12 erzielbaren Vorteile können mit den Pressvorrichtungen 110, 130 ebenfalls erzielt werden, so dass diesbezüglich auf die voranstehenden Ausführungen verwiesen wird. Es werden lediglich die wesentlichen Unterschiede beschrieben.

Bei der Pressvorrichtung 110 gemäß den Figuren 13 und 14 ist vorgesehen, dass jeweils die erste Zwischenwand 70 zwischen dem Pressraum 62 und dem ersten Folgeraum 64 als Widerlager 78 für die Kompression eines Vorballens 32 wirkt. Dies wird insbesondere aus dem Vergleich der Figuren 8 und 13 deutlich. Dementsprechend wird der erste Teilballen 98 nach der Kompression in den ersten Folgeraum 64 transportiert und die davorliegende Zwischenwand 70 geschlossen (Figur 13). Nach der Kompression wird die erste Zwischenwand 70 wieder geöffnet, und der zweite Teilballen 98 wird gegen den ersten Teilballen 98 verschoben (Figur 14).

Im Anschluss daran wird sukzessive eine weitere der zweiten und folgenden Zwischenwände 70 geöffnet. Die erste Zwischenwand 70 wird zur Ausbildung des Widerlagers 78 wieder geschlossen, wenn die Teilballen 98 aus dem Pressraum 62 entfernt wurden, zur Kompression des nächsten Vorballens 32.

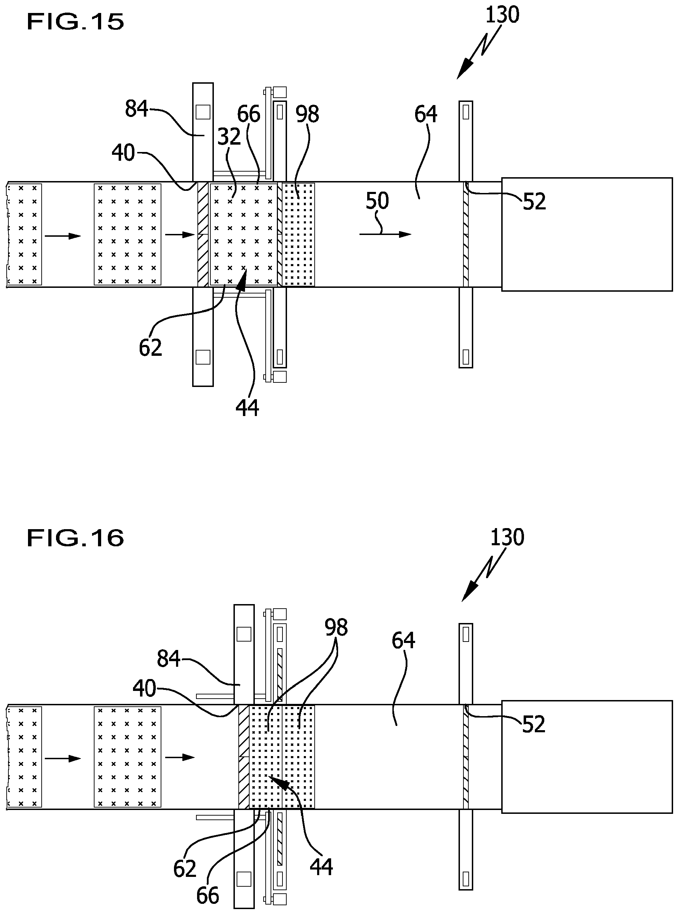

Eine vereinfachte Ausführungsform der Pressvorrichtung 130 in den Figuren 15 und 16 sieht ebenfalls vor, dass der jeweilige Vorballen 32 zur Bildung des ersten und jedes nachfolgenden Teilballens 98 gegen die erste Zwischenwand 70 am Pressraum 62 komprimiert wird, die als Widerlager 78 dient.

Im Unterschied zur Pressvorrichtung 110 ist lediglich ein Folgeraum 64 vorgesehen, der in seiner Erstreckung längs der Arbeitsrichtung 50 beispielsweise mit der Erstreckung der Folgeräume 64 bei der Pressvorrichtung 110 übereinstimmt.

Der jeweils zuletzt gebildete Teilballen 98 wird bei geöffneter Zwischenwand 70 in den Folgeraum 64 durch die Transportöffnung 72 transportiert. Die Zwischenwand 70 wird für die folgende Kompression geschlossen.

Auch bei den Pressvorrichtungen 110 und 130 werden die Teilballen 98 miteinander mittels der Bindeeinrichtung 102 noch in der Presskammer 44 verbunden, bevor der gebundene Endballen 14 über die Ausgabeöffnung 52 ausgegeben wird.

Die Pressvorrichtung 130 zeichnet sich durch eine konstruktiv einfache Ausgestaltung aus. Bei der Pressvorrichtung 110 wird durch die jeweils geschlossenen Zwischenwände 70 eine Aufweitung des Teilballens 98 verhindert, zumal die Länge des jeweiligen Folgeraumes 64 der Länge des Teilballens 98 entspricht. Bei der Pressvorrichtung 12, bei der jeweils ein unterschiedliches Widerlager 78 für die Kompression eingesetzt wird, werden die Teilballen 98 zur Verbindung gegeneinandergepresst.

### Bezugszeichenliste

- 10: Presssystem
- 12, 110, 130: Pressvorrichtung
- 14: Endballen
- 16: Fahrzeug
- 18: Fahrantrieb
- 20: Rad
- 22: Nutzfläche
- 24: Steuereinrichtung
- 26: Portionierungseinrichtung
- 28: vorportionierte Menge
- 30: Kompressionseinheit
- 32: Vorballen
- 34: Sensoreinrichtung
- 36: Zuführeinrichtung
- 38: Transportbahn
- 40: Zuführöffnung
- 42: Trageinrichtung
- 44: Presskammer
- 46: Gehäuse
- 48: Transporteinrichtung
- 50: Arbeitsrichtung
- 52: Ausgabeöffnung
- 54: Transportbahn
- 56: Frontwand
- 58: hintere Wand
- 60: Presskammerabschnitt
- 62: Pressraum
- 64: Folgeraum
- 66: Presskasten
- 68: Begrenzung
- 70: Zwischenwand
- 72: Transportöffnung
- 74: Segment
- 76: Antriebseinrichtung
- 78: Widerlager
- 80, 82: Schließeinrichtung
- 84: Pressorgan
- 86: Antriebseinrichtung
- 88: Anfangsstellung
- 90: Endstellung
- 92: Antriebsorgan
- 94: Spindelantrieb
- 96: Eckbereich
- 98: Teilballen
- 100: gestrichelte Linie
- 102: Bindeeinrichtung
- 104, 106: Bindeeinheit

## Patentansprüche

1. Pressvorrichtung für insbesondere langstängeliges Pflanzengut zum Bereitstellen eines Ballens aus dem Pflanzengut, umfassend:
- eine Presskammer (44) mit einem Pressraum (62), dem mittels einer Zuführeinrichtung (36) über eine Zuführöffnung (40) Pflanzengut zuführbar ist,
- ein von einer Anfangsstellung (88) in eine Endstellung (90) bewegliches Pressorgan (84) mit einer Antriebseinrichtung (86) zum Komprimieren des Pflanzengutes, und
- eine Bindeeinrichtung (102),
wobei:
- der Pressraum (62) seitlich durch einen Presskasten (66) begrenzt ist und ein Widerlager (78) den Pressraum (62) begrenzt, gegen das das Pflanzengut bei der Bewegung des Pressorgans (84) zu einem ersten Teilballen (98) komprimierbar ist,
- ein so bereitgestellter erster Teilballen (98) durch eine Transportöffnung (72) des Pressraumes (62) in einen Folgeraum (64) transportierbar ist,
wobei mittels des Pressorgans (84) mindestens ein weiterer Teilballen (98) durch Komprimieren von weiterem in den Pressraum (62) eingebrachten Pflanzengut gegen mindestens ein an der Presskammer (44) angeordnetes Widerlager (78) bereitstellbar ist,
- das Widerlager (78) zum Bereitstellen des ersten Teilballens (98) und das mindestens eine weitere Widerlager (78) zum Bereitstellen des mindestens einen weiteren Teilballens (98) voneinander unterschiedliche Widerlager (78) sind,
- das mindestens eine weitere Widerlager (78) und der Presskasten (66) den Folgeraum (64) begrenzen und das weitere Pflanzengut zur Bildung des mindestens einen weiteren Teilballens (98) gegen den am mindestens einen weiteren Widerlager (78) abgestützten ersten Teilballen (98) komprimierbar ist,
- die Teilballen (98) über eine Ausgabeöffnung (52) der Presskammer (44) ausgebbar sind, und
- die zwei oder mehr Teilballen (98) mittels der Bindeeinrichtung (102) zu einem Endballen (14) verbindbar sind.

2. Pressvorrichtung nach Anspruch 1, **dadurch gekennzeichnet, dass** zumindest eines der Folgenden gilt:
- die Pressvorrichtung (12; 110; 130) umfasst eine Transporteinrichtung (48), mit der die Teilballen (98) vom Pressraum (62) in mindestens einen Folgeraum (64) bis zur Ausgabeöffnung (52) der Presskammer (44) transportierbar sind;
- der Teilballen (98) und der mindestens eine weitere Teilballen (98) sind vom Pressraum (62) zur Ausgabeöffnung (52) in einer Arbeitsrichtung (50) der Pressvorrichtung (12; 110; 130) transportierbar, die vorzugsweise geradlinig und durch den Presskasten (66) definiert ist;
- die Pressvorrichtung (12; 110; 130) umfasst zwei oder mehr in einer Arbeitsrichtung (50) der Pressvorrichtung (12; 110; 130) hintereinander angeordnete Folgeräume (64) und zwei oder mehr Widerlager (78), wobei ein jeweiliges Widerlager (78) davon den jeweiligen Folgeraum (64) begrenzt, an welchem jeweiligen Widerlager (78) der erste Teilballen (98) bei der Bildung der weiteren Teilballen (98) abstützbar ist und wobei das weitere Pflanzengut im Pressraum (62) gegen den jeweils zuletzt gebildeten Teilballen (98) komprimierbar ist, insbesondere dass insgesamt fünf Folgeräume (64) vorgesehen sind und der Endballen (14) sechs miteinander verbundene Teilballen (98) umfasst;
- die Presskammer (44) umfasst den Pressraum (62) als Presskammerabschnitt (60) und einen jeweiligen Folgeraum (64) als weitere dem Pressraum (62) in der Arbeitsrichtung (50) nachfolgende Presskammerabschnitte (60), wobei an dem in der Arbeitsrichtung (50) letzten Presskammerabschnitt (60) die Ausgabeöffnung (52) der Presskammer (44) für die Teilballen (98), insbesondere gebunden zum Endballen (14), angeordnet ist.

3. Pressvorrichtung nach einem der voranstehenden Ansprüche, **dadurch gekennzeichnet, dass** das Widerlager (78) am Pressraum (62) eine Zwischenwand (70) zwischen dem Pressraum (62) und dem Folgeraum (64) ist und mittels einer Antriebseinrichtung (76) von einer Schließstellung, in der das Pflanzengut gegen die Zwischenwand (70) komprimierbar ist, in eine Öffnungsstellung, in der der Teilballen (98) in den Folgeraum (64) transportierbar ist, und umgekehrt überführbar ist, vorzugsweise dass die Zwischenwand (70) oder die Schließeinrichtung (80) als Ganzes oder in einzelnen, jeweils bewegbaren Segmenten (74) quer zur Arbeitsrichtung (50) aus dem Presskasten (66) bewegbar ist zur Überführung von der Schließstellung in die Öffnungsstellung und umgekehrt.

4. Pressvorrichtung nach einem der voranstehenden Ansprüche, **dadurch gekennzeichnet, dass** zumindest eines der Folgenden gilt:
- das Widerlager (78) zwischen einander benachbarten Folgeräumen (64) ist jeweils eine Zwischenwand (70) zwischen den Folgeräumen (64) und ist mittels einer Antriebseinrichtung (76) von einer Schließstellung, in der der erste Teilballen (98) gegen die Zwischenwand (70) abstützbar ist, in eine Öffnungsstellung, in der der erste Teilballen (98) in den nächsten Folgeraum (64) transportierbar ist, und umgekehrt überführbar;
- das Widerlager (78) an dem in der Arbeitsrichtung (50) letzten Folgeraum (64) ist eine Schließeinrichtung (80) einer hinteren Wand (58) der Presskammer (44) und ist mittels einer Antriebseinrichtung (76) von einer die Ausgabeöffnung (52) der Presskammer (44) verschließenden Schließstellung, in der der erste Teilballen (98) gegen die Schließeinrichtung (80) abstützbar, in eine die Ausgabeöffnung (52) freigebenden Öffnungsstellung, in der die Teilballen (98) aus der Presskammer (44) transportierbar sind, und umgekehrt überführbar;
- das Widerlager (78) am Pressraum (62) und das mindestens eine weitere Widerlager (78) sind ortsfest an der Pressvorrichtung (12; 110; 130) hinsichtlich einer Bewegung in der Arbeitsrichtung (50) der Pressvorrichtung (12; 110; 130);
- der Presskasten (66) weist am Pressraum (62) und am Folgeraum (64), insbesondere an den zwei oder mehr Folgeräumen (64), eine identische oder im Wesentlichen identische Querschnittsfläche auf.

5. Pressvorrichtung nach einem der voranstehenden Ansprüche, **dadurch gekennzeichnet, dass** zumindest eines der Folgenden gilt:
- der Folgeraum (64), insbesondere die zwei oder mehr Folgeräume (64), ist in Arbeitsrichtung (50) der Pressvorrichtung (12; 110; 130) kürzer ausgestaltet als der Pressraum (62);
- die Teilballen (98) werden im Pressraum (62) mit vorgegebenem oder vorgebbaren Weg des Pressorgans (84) von der Anfangsstellung (88) in die Endstellung (90) gebildet, insbesondere werden die Teilballen (98) mit konstantem Volumen gebildet;
- eine Länge mindestens eines in Arbeitsrichtung (50) auf den Pressraum (62) folgenden Folgeraumes (64), insbesondere eines jeweiligen Folgeraumes (64), ist gleich der Länge des Teilballens (98), definiert durch den Bewegungsumfang des Pressorgans (84) von der Anfangsstellung (88) in die Endstellung (90);
- zwei oder mehr Folgeräume (64) sind vorgesehen, die entlang der der Arbeitsrichtung (50) der Pressvorrichtung (12; 110; 130) gleich lang sind.

6. Pressvorrichtung nach einem der voranstehenden Ansprüche, **dadurch gekennzeichnet, dass** für das Innenmaß des Pressraumes (62) oder des Presskastens (66) zumindest eines der Folgenden gilt:
- der Pressraum (62), in der Endstellung (90) des Pressorgans (84), weist eine Länge auf, die ungefähr einem ganzzahligen Bruchteil eines Innenmaßes eines Containers der ISO-Norm 668 für Container entspricht;
- der Presskasten (66) weist eine Breite auf, die ungefähr einem ganzzahligen Bruchteil eines Innenmaßes eines Containers der ISO-Norm 668 für Container entspricht;
- der Presskasten (66) weist eine Höhe auf, die ungefähr einem ganzzahligen Bruchteil eines Innenmaßes eines Containers der ISO-Norm 668 für Container entspricht;
wobei der Container insbesondere ein 20-Fuß-Container oder ein 40-Fuß-Container der Norm ISO 668 ist.

7. Pressvorrichtung nach einem der voranstehenden Ansprüche, **dadurch gekennzeichnet, dass** zumindest eines der Folgenden gilt:
- der Endballen (14) weist eine Länge auf, die ungefähr einem ganzzahligen Bruchteil eines Innenmaßes eines Containers der ISO-Norm 668 für Container entspricht;
- der Endballen (14) weist eine Breite auf, die ungefähr einem ganzzahligen Bruchteil eines Innenmaßes eines Containers der ISO-Norm 668 für Container entspricht;
- der Endballen (14) weist eine Höhe auf, die ungefähr einem ganzzahligen Bruchteil eines Innenmaßes eines Containers der ISO-Norm 668 für Container entspricht.

8. Pressvorrichtung nach einem der voranstehenden Ansprüche, **dadurch gekennzeichnet, dass** zumindest eines der Folgenden gilt:
- die Antriebseinrichtung (86) für das Pressorgan (84) ist mechanisch, elektrisch, hydraulisch, pneumatisch oder durch eine Kombination hiervon ausgestaltet;
- die Antriebseinrichtung (86) umfasst mindestens einen Spindelantrieb (94), wobei seitlich neben der Zuführöffnung (40) mit dem Pressorgan (84) gekoppelte Spindeln angeordnet sind, insbesondere dass vier Spindeln vorhanden sind, die neben Eckbereichen (96) der Zuführöffnung (40) mit dem Pressorgan (84) gekoppelt sind;
- die Presskammer (44) umfasst eine Frontwand (56), in der die Zuführöffnung (40) gebildet ist und die das Pressorgan (84) umfasst oder ausbildet, wobei eine Schließeinrichtung (82) vorgesehen ist, die mittels einer Antriebseinrichtung (76) in eine Öffnungsstellung überführbar ist, zum Zuführen des Pflanzengutes in den Pressraum (62), und die in einer Schließstellung die Zuführöffnung (40) verschließt, und wobei die Frontwand (56) mittels der Antriebseinrichtung (86) zum Komprimieren des Pflanzengutes bewegbar ist, wobei vorzugsweise die Schließeinrichtung (82) ganz oder in einzelnen, jeweils bewegbaren Segmenten (74) quer zur Arbeitsrichtung (50) bewegbar ist zur Überführung von der Schließstellung in die Öffnungsstellung und umgekehrt;
- die Bindeeinrichtung (102) ist eine Umreifungseinrichtung.

9. Pressvorrichtung nach einem der voranstehenden Ansprüche, **dadurch gekennzeichnet, dass** zumindest eines der Folgenden gilt:
- die Bindeeinrichtung (102) ist an der Presskammer (44) angeordnet, und der Endballen (14) ist durch Binden der Teilballen (98) in der Presskammer (44) bereitstellbar;
- die Bindeeinrichtung (102) umfasst eine erste Bindeeinheit (104) und eine zweite Bindeeinheit (106), die von einander gegenüberliegen Seiten in den Presskasten (66) einführbar sind, wobei über jede Bindeeinheit (104, 106) mindestens ein Strang oder Band bereitstellbar ist, wobei die Stränge oder Bänder verschiedener Bindeeinheiten den Endballen (14) umgreifend miteinander verbunden werden;
- die Bänder sind Metallbänder, die durch Kraft- und/oder Formschluss miteinander verbindbar sind;
- die Pressvorrichtung (12; 110; 130) umfasst eine Steuereinrichtung (24) zum Ansteuern aktiver Komponenten der Pressvorrichtung (12; 110; 130) oder eines Presssystems (10), das die Pressvorrichtung (12; 110; 130) umfasst.

10. Presssystem, umfassend eine Pressvorrichtung (12; 110; 130) nach einem der voranstehenden Ansprüche und eine der Pressvorrichtung (12; 110; 130) in der Arbeitsrichtung (50) vorgelagerte Portionierungseinrichtung (26), über welche der Pressvorrichtung (12; 110; 130) eine vorportionierte Menge (28) an Pflanzengut zum Bilden eines jeweiligen Teilballens (98) bereitstellbar ist.

11. Presssystem nach Anspruch 10, **dadurch gekennzeichnet, dass** die vorportionierte Menge (28) an Pflanzengut hinsichtlich Ihres Volumens und/oder hinsichtlich Ihres Gewichtes vorgebbar ist und/oder dass die Portionierungseinrichtung (26) eine Kompressionseinheit (30) umfasst zur Vorkompression der vorportionierten Menge (28) an Pflanzengut, insbesondere in Form eines Vorballens (32).

12. Presssystem nach Anspruch 10 oder 11, **dadurch gekennzeichnet, dass** das Presssystem (10) mindestens eine Sensoreinrichtung (34) umfasst, mit der zumindest eines der Folgenden ermittelbar ist:
- eine Masse der vorportionierten Menge (28) an Pflanzengut vor dem Einbringen in den Pressraum (62);
- eine Masse eines gebildeten Teilballens (98) in der Presskammer (44);
wobei vorzugsweise die Portionierungseinrichtung (26) abhängig von der ermittelten Masse des Teilballens (98) zum Bereitstellen der vorportionierten Menge (28) an Pflanzengut ansteuerbar ist, im Hinblick auf eine vorgegebene oder vorgebbare durchschnittliche Dichte der Endballen (14).

13. Presssystem, insbesondere nach einem der Ansprüche 10 bis 12, umfassend eine Pressvorrichtung (12; 110; 130) nach einem der Ansprüche 1 bis 9 und ein Fahrzeug (16) zum Verfahren auf einer landwirtschaftlichen Nutzfläche (22), wobei das Fahrzeug (16) eine Trageinrichtung (42) umfasst, auf der die Pressvorrichtung (12; 110; 130) angeordnet ist.

14. Presssystem nach Anspruch 13, **dadurch gekennzeichnet, dass** das Fahrzeug (16) einen Fahrantrieb (18) umfasst und/oder dass das Fahrzeug (16) selbstfahrend und selbstlenkend ausgestaltet ist.

15. Verfahren zum Bereitstellen eines Endballens mit einer Pressvorrichtung nach einem der Ansprüche 1 bis 9, **gekennzeichnet durch** die folgenden Schritte:
- Komprimieren von Pflanzengut zur Ausbildung eines ersten Teilballens;
- Komprimieren von Pflanzengut zur Ausbildung mindestens eines weiteren Teilballens;
- Verbinden der Teilballen miteinander zur Ausbildung eines Endballens.

## Claims

1. A pressing device for in particular long-stemmed plant material for providing a bale made from the plant material, comprising:
- a pressing chamber (44) having a pressing space (62) to which plant material can be supplied by means of a supply apparatus (36) via a supply opening (40),
- a pressing element (84), which is movable from an initial position (88) into an end position (90) having a drive apparatus (86) for compressing the plant material, and
- a binding apparatus (102),
wherein:
- the pressing space (62) is laterally delimited by a pressing box (66), and an abutment (78) delimits the pressing space (62) against which the plant material is compressible during the movement of the pressing element (84) to form a first partial bale (98),
- a first partial bale (98) provided in this way is transportable through a transport opening (72) of the pressing space (62) into a following space (64),
wherein at least one further partial bale (98) is providable by means of the pressing element (84) by compressing further plant material introduced into the pressing space (62) against at least one abutment (78) arranged on the pressing chamber (44),
- the abutment (78) for providing the first partial bale (98) and the at least one further abutment (78) for providing the at least one further partial bale (98) are abutments (78) which are different from one another,
- the at least one further abutment (78) and the pressing box (66) delimit the following space (64) and the further plant material is compressible against the first partial bale (98) supported on the at least one further abutment (78) to form the at least one further partial bale (98),
- the partial bales (98) can be output via an output opening (52) of the pressing chamber (44), and
- the two or more partial bales (98) are connectable to form a final bale (14) by means of the binding apparatus (102).

2. The pressing device in accordance with claim 1, **characterized in that** at least one of the following applies:
- the pressing device (12; 110; 130) comprises a transport apparatus (48) by means of which the partial bales (98) are transportable from the pressing space (62) into at least one following space (64) to the output opening (52) of the pressing chamber (44);
- the partial bale (98) and the at least one further partial bale (98) are transportable from the pressing space (62) to the output opening (52) in a working direction (50) of the pressing device (12; 110; 130), which is preferably straight and defined by the pressing box (66);
- the pressing device (12; 110; 130) comprises two or more following spaces (64) arranged one behind the other in a working direction (50) of the pressing device (12; 110; 130) and two or more abutments (78), wherein a respective abutment (78) thereof delimits the respective following space (64) on which respective abutment (78) the first partial bale (98) can be supported during the formation of the further partial bales (98), and wherein the further plant material is compressible in the pressing space (62) against the respective last-formed partial bale (98); in particular **in that** a total of five following spaces (64) are provided and the final bale (14) comprises six interconnected partial bales (98);
- the pressing chamber (44) comprises the pressing space (62) as a pressing chamber section (60) and a respective following space (64) as further pressing chamber sections (60) following the pressing space (62) in the working direction (50), wherein the output opening (52) of the pressing chamber (44) for the partial bales (98), in particular bound to the final bale (14), is arranged on the last pressing chamber section (60) in the working direction (50).

3. The pressing device in accordance with any one of the preceding claims, **characterized in that** the abutment (78) at the pressing space (62) is an intermediate wall (70) between the pressing space (62) and the following space (64) and is transferable by means of a drive apparatus (76) from a closed position, in which the plant material is compressible against the intermediate wall (70), into an open position, in which the partial bale (98) is transportable into the following space (64), and vice versa, preferably **in that** the intermediate wall (70) or the closing apparatus (80) is movable out of the pressing box (66) as a whole or in individual, respectively movable segments (74) transversely to the working direction (50) for transfer from the closed position to the open position and vice versa.

4. The pressing device in accordance with any one of the preceding claims, **characterized in that** at least one of the following applies:
- the abutment (78) between adjacent following spaces (64) is in each case an intermediate wall (70) between the following spaces (64) and is transferable by means of a drive apparatus (76) from a closed position, in which the first partial bale (98) is supportable against the intermediate wall (70), into an open position, in which the first partial bale (98) is transportable into the next following space (64), and vice versa;
- the abutment (78) at the last following space (64) in the working direction (50) is a closing apparatus (80) of a rear wall (58) of the pressing chamber (44) and is transferable by means of a drive apparatus (76) from a closed position closing the output opening (52) of the pressing chamber (44), in which the first partial bale (98) can be supported against the closing apparatus (80), into an open position releasing the output opening (52) and vice versa, in which open position the partial bales (98) are transportable out of the pressing chamber (44);
- the abutment (78) on the pressing space (62) and the at least one further abutment (78) are stationary on the pressing device (12; 110; 130) with respect to a movement in the working direction (50) of the pressing device (12; 110; 130);
- the pressing box (66) has an identical or substantially identical cross-sectional area at the pressing space (62) and at the following space (64), in particular on the two or more following spaces (64).

5. The pressing device in accordance with any one of the preceding claims, **characterized in that** at least one of the following applies:
- the following space (64), in particular the two or more following spaces (64), is designed shorter than the pressing space (62) in the working direction (50) of the pressing device (12; 110; 130);
- the partial bales (98) are formed in the pressing space (62) with a predetermined or predeterminable path of the pressing element (84) from the initial position (88) into the end position (90), in particular the partial bales (98) are formed with a constant volume;
- a length of at least one following space (64) following the pressing space (62) in the working direction (50), in particular a respective following space (64), is equal to the length of the partial bale (98), defined by the range of movement of the pressing element (84) from the initial position (88) into the end position (90);
- two or more following spaces (64) are provided which are of equal length along the working direction (50) of the pressing device (12; 110; 130).

6. The pressing device in accordance with any one of the preceding claims, **characterized in that** at least one of the following applies to the interior dimension of the pressing space (62) or the pressing box (66):
- the pressing space (62), in the end position (90) of the pressing element (84), has a length which corresponds approximately to an integer fraction of an internal dimension of a container of the ISO standard 668 for containers;
- the pressing box (66) has a width which corresponds approximately to an integer fraction of an internal dimension of a container of the ISO standard 668 for containers;
- the pressing box (66) has a height which corresponds approximately to an integer fraction of an internal dimension of a container of the ISO standard 668 for containers;
wherein the container is in particular a 20-foot container or a 40-foot container of the standard ISO 668.

7. The pressing device in accordance with any one of the preceding claims, **characterized in that** at least one of the following applies:
- the final bale (14) has a length which corresponds approximately to an integer fraction of an internal dimension of a container of the ISO standard 668 for containers;
- the final bale (14) has a width which corresponds approximately to an integer fraction of an internal dimension of a container of the ISO standard 668 for containers;
- the final bale (14) has a height which corresponds approximately to an integer fraction of an internal dimension of a container of the ISO standard 668 for containers.

8. The pressing device in accordance with any one of the preceding claims, **characterized in that** at least one of the following applies:
- the drive apparatus (86) for the pressing element (84) is configured mechanically, electrically, hydraulically, pneumatically or by a combination thereof;
- the drive apparatus (86) comprises at least one spindle drive (94), wherein spindles coupled with the pressing element (84) are arranged laterally next to the supply opening (40), in particular that four spindles are present which are coupled to the pressing element (84) next to corner regions (96) of the supply opening (40);
- the pressing chamber (44) comprises a front wall (56) in which the supply opening (40) is formed and which comprises or forms the pressing element (84), wherein a closing apparatus (82) is provided, which is transferable by means of a drive apparatus (76) into an open position, for supplying the plant material into the pressing space (62), and which closes the supply opening (40) in a closed position, and the front wall (56) is movable by means of the drive apparatus (86) for compressing the plant material, wherein preferably the closing apparatus (82) is movable completely or in individual, respectively movable segments (74) transversely to the working direction (50) for transfer from the closed position to the open position and vice versa;
- the binding apparatus (102) is a strapping apparatus.

9. The pressing device in accordance with any one of the preceding claims, **characterized in that** at least one of the following applies:
- the binding apparatus (102) is arranged at the pressing chamber (44) and the final bale (14) is providable in the pressing chamber (44) by binding the partial bales (98);
- the binding apparatus (102) comprises a first binding unit (104) and a second binding unit (106) which are insertable into the pressing box (66) from opposite sides, wherein at least one strand or strap is providable by each binding unit (104, 106), wherein the strands or straps of different binding units are connected to one another encircling the final bale (14);
- the straps are metal straps which are connectable to one another in a force-locking and/or positive-locking manner;
- the pressing device (12; 110; 130) comprises a control apparatus (24) for controlling active components of the pressing device (12; 110; 130) or of a pressing system (10) comprising the pressing device (12; 110; 130).

10. A pressing system comprising a pressing device (12; 110; 130) in accordance with any one of the preceding claims and a portioning apparatus (26) upstream of the pressing device (12; 110; 130) in the working direction (50), via which portioning apparatus (26) a pre-portioned amount (28) of plant material is providable to the pressing device (12; 110; 130) for forming a respective partial bale (98).

11. The pressing system in accordance with claim 10, **characterized in that** the pre-portioned amount (28) of plant material is specifiable with respect to its volume and/or with respect to its weight and/or **in that** the portioning apparatus (26) comprises a compression unit (30) for precompression of the pre-portioned amount (28) of plant material, in particular in the form of a pre-bale (32).

12. The pressing system in accordance with claim 10 or 11, **characterized in that** the pressing system (10) comprises at least one sensor apparatus (34) by means of which at least one of the following is determinable:
- a mass of the pre-portioned amount (28) of plant material prior to introduction into the pressing space (62);
- a mass of a formed partial bale (98) in the pressing chamber (44);
wherein preferably the portioning apparatus (26) is controllable as a function of the determined mass of the partial bale (98) for providing the pre-portioned amount (28) of plant material, with regard to a predetermined or predeterminable average density of the final bales (14).

13. The pressing system, in particular in accordance with any one of claims 10 to 12, comprising a pressing device (12; 110; 130) in accordance with any one of claims 1 to 9 and a vehicle (16) for driving on agricultural land (22), wherein the vehicle (16) comprises a support apparatus (42) on which the pressing device (12; 110; 130) is arranged.

14. The pressing system in accordance with claim 13, **characterized in that** the vehicle (16) comprises a traction drive (18) and/or **in that** the vehicle (16) is configured to be self-propelled and self-steering.

15. A method for providing a final bale with a pressing device, in accordance with any one of claims 1 to 9, **characterized by** the following steps:
- compressing plant material to form a first partial bale;
- compressing plant material to form at least one further partial bale;
- joining the partial bales with one another to form a final bale.

## Revendications

1. Dispositif de compression, en particulier de végétaux à tiges longues, pour la préparation de balles végétales, comprenant :
- une chambre de compression (44) avec un espace de compression (62) dans lequel les végétaux peuvent être amenés au moyen d'un dispositif d'alimentation (36) via une ouverture d'alimentation (40),
- un organe presseur mobile (84) d'une position initiale (88) vers une position finale (90) avec un dispositif d'entraînement (86) pour comprimer les végétaux et
- un dispositif de liage (102)
dispositif de compression dans lequel:
- l'espace de compression (62) étant bordé latéralement par un caisson de compression (66) et une butée (78) borde l'espace de compression (62), contre laquelle les végétaux peuvent être comprimés en une première balle partielle (98) par déplacement de l'organe presseur (84),
- la première balle partielle (98) ainsi préparée pouvant être transportée à travers une ouverture de transport (72) de l'espace de compression (62) vers un espace ultérieur (64),
au moins une autre balle partielle (98) peut être préparée au moyen de l'organe presseur (84) par la compression d'autres végétaux introduits dans l'espace de compression (62) contre au moins une butée (78) agencée sur la chambre de compression (44),
- la butée (78) permettant de préparer la première balle partielle (98) et l' au moins une autre butée (78), permettant de préparer au moins une autre balle partielle (98) étant des butées différentes l'une de l'autre (78),
- l' au moins une autre butée (78) et le caisson de compression (66) bordant l'espace ultérieur (64) et les autres végétaux pouvant être comprimés pour former au moins une autre balle partielle (98) contre la première balle partielle (98) prenant appui sur l' au moins une autre butée (78),
- les balles partielles (98) pouvant être dispensées via une ouverture de sortie (52) de la chambre de compression (44), et
- les deux balles partielles ou plus (98) pouvant être reliées pour former une balle finale (14) au moyen du dispositif de liage (102).

2. Dispositif de compression selon la revendication 1, **caractérisé en ce qu'**au moins l'un des énoncés suivants s'applique :
- le dispositif de compression (12 ; 110 ; 130) comprend un dispositif de transport (48) permettant de transporter les balles partielles (98) de l'espace de compression (62) vers au moins un espace ultérieur (64) jusqu'à l'ouverture de sortie (52) de la chambre de compression (44) ;
- la balle partielle (98) et l' au moins une autre balle partielle (98) peuvent être transportées de l'espace de compression (62) vers l'ouverture de sortie (52) dans une direction de fonctionnement (50) du dispositif de compression (12 ; 110 ; 130), qui est définie de préférence en ligne droite et à travers le caisson de compression (66) ;
- le dispositif de compression (12 ; 110 ; 130) comprend deux ou plusieurs espaces ultérieurs (64) agencés les uns derrière des autres dans une direction de fonctionnement (50) du dispositif de compression (12 ; 110 ; 130) et deux ou plusieurs butées (78), une de ces butées respectives (78) bordant l'espace ultérieur respectif (64) sur lequel la première balle partielle (98) peut être mise en appui sur la butée respective (78) pendant la formation des autres balles partielles (98), les autres végétaux dans l'espace de compression (62) pouvant être comprimés contre la dernière balle partielle formée (98), en particulier **en ce qu'**un total de cinq espaces ultérieurs (64) sont prévus et que la balle finale (14) comprend six balles partielles (98) reliées entre elles ;
- la chambre de compression (44) comprend l'espace de compression (62) en tant que section de la chambre de compression (60) et un espace ultérieur respectif (64) en tant que section de la chambre de compression (60) suivant la chambre de compression (60) dans la direction de fonctionnement (50), l'ouverture de sortie (52) de la chambre de compression (44) pour les balles partielles (98), en particulier liées à la balle finale (14), étant agencée sur la dernière section de la chambre de compression (60) dans la direction de fonctionnement (50).

3. Dispositif de compression selon l'une des revendications précédentes, **caractérisé en ce que** la butée (78) sur l'espace de compression (62) est une paroi intermédiaire (70) entre l'espace de compression (62) et l'espace ultérieur (64), butée pouvant être, au moyen d'un dispositif d'entraînement (76), déplacée depuis une position fermée, dans laquelle les végétaux peuvent être comprimés contre la paroi intermédiaire (70), vers une position ouverte, dans laquelle la balle partielle (98) peut être transportée vers l'espace ultérieur (64), et pouvant être déplacée en sens inverse, la paroi intermédiaire (70) ou le dispositif de fermeture (80) pouvant de préférence être déplacé en entier ou par segments mobiles individuels (74) transversalement par rapport à la direction de fonctionnement (50) hors du caisson de compression (66) pour le passage de la position fermée à la position ouverte et inversement.

4. Dispositif de compression selon l'une des revendications précédentes, **caractérisé en ce qu'**au moins l'un des énoncés suivants s'applique :
- la butée (78) entre les espaces ultérieurs adjacents (64) est respectivement une paroi intermédiaire (70) entre les espaces ultérieurs (64) et peut être déplacée au moyen d'un dispositif d'entraînement (76) depuis une position fermée dans laquelle la première balle partielle (98) peut prendre appui contre la paroi intermédiaire (70), jusqu'à une position ouverte dans laquelle la première balle partielle (98) peut être transportée dans l'espace ultérieur suivant (64) et inversement ;
- la butée (78) sur le dernier espace ultérieur (64) dans la direction de fonctionnement (50) est un dispositif de fermeture (80) d'une paroi arrière (58) de la chambre de compression (44) et est déplacée au moyen d'un dispositif d'entraînement (76) depuis une position fermée qui ferme l'ouverture de sortie (52) de la chambre de compression (44) dans laquelle la première balle partielle (98) peut prendre appui contre le dispositif de fermeture (80) dans une position ouverte qui libère l'ouverture de sortie (52), dans laquelle les balles partielles (98) peuvent être transportées hors de la chambre de compression (44) et inversement ;
- la butée (78) sur l'espace de compression (62) et l'au moins une autre butée (78) sont fixées sur le dispositif de compression (12 ; 110 ; 130) d'une manière immobile pour un mouvement dans la direction de fonctionnement (50) du dispositif de compression (12 ; 110 ; 130) ;
- le caisson de compression (66) présente une section transversale identique ou essentiellement identique sur l'espace de compression (62) et sur l'espace ultérieur (64), en particulier sur les deux ou plusieurs espaces ultérieurs (64).

5. Dispositif de compression selon l'une des revendications précédentes, **caractérisé en ce qu'**au moins l'un des énoncés suivants s'applique :
- l'espace ultérieur (64), en particulier les deux ou plusieurs espaces ultérieurs (64), est conçu pour être plus court que l'espace de compression (62) dans la direction de fonctionnement (50) du dispositif de compression (12 ; 110 ; 130) ;
- les balles partielles (98) sont formées dans l'espace de compression (62) selon un trajet prédéterminé ou prédéterminable de l'organe presseur (84) de la position initiale (88) à la position finale (90), en particulier, les balles partielles (98) sont formés à volume constant ;
- une longueur d'au moins un espace ultérieur suivant (64) sur l'espace de compression (62) dans la direction de fonctionnement (50), en particulier un espace ultérieur respectif (64), est égale à la longueur de la balle partielle (98), définie par l'amplitude de mouvement de l'organe presseur (84) de la position de départ (88) à la position finale (90) ;
- deux ou plusieurs espaces ultérieurs (64) sont prévus, qui sont de longueur égale le long de la direction de fonctionnement (50) du dispositif de compression (12 ; 110 ; 130).

6. Dispositif de compression selon l'une des revendications précédentes, **caractérisé en ce qu'**au moins l'un des énoncés suivants s'applique à la dimension intérieure de l'espace de compression (62) ou du caisson de compression (66) :
- l'espace de compression (62), dans la position finale (90) de l'organe presseur (84), a une longueur qui correspond approximativement à une fraction entière d'une dimension intérieure d'un conteneur répondant à la norme ISO 668 relative aux conteneurs ;
- le caisson de compression (66) a une largeur qui correspond approximativement à une fraction entière d'une dimension intérieure d'un conteneur répondant à la norme ISO 668 relative aux conteneurs ;
- le caisson de compression (66) a une hauteur qui correspond approximativement à une fraction entière d'une dimension intérieure d'un conteneur répondant à la norme ISO 668 relative aux conteneurs ;
le récipient étant en particulier un conteneur de 20 pieds ou un conteneur de 40 pieds répondant à la norme ISO 668.

7. Dispositif de compression selon l'une des revendications précédentes, **caractérisé en ce qu'**au moins l'un des énoncés suivants s'applique :
- la balle finale (14) a une longueur qui correspond approximativement à une fraction entière d'une dimension intérieure d'un conteneur répondant à la norme ISO 668 relative aux conteneurs ;
- la balle finale (14) a une largeur qui correspond approximativement à une fraction entière d'une dimension intérieure d'un conteneur répondant à la norme ISO 668 relative aux conteneurs ;
- la balle finale (14) a une hauteur qui correspond approximativement à une fraction entière d'une dimension intérieure d'un conteneur répondant à la norme ISO 668 relative aux conteneurs.

8. Dispositif de compression selon l'une des revendications précédentes, **caractérisé en ce qu'**au moins l'un des énoncés suivants s'applique :
- le dispositif d'entraînement (86) pour l'organe presseur (84) est conçu mécaniquement, électriquement, hydrauliquement, pneumatiquement ou par une combinaison de ces procédés ;
- le dispositif d'entraînement (86) comprend au moins un entraînement à broche (94), les broches couplées à l'organe presseur (84) étant disposées latéralement à côté de l'ouverture d'alimentation (40), en particulier, quatre broches sont présentes, qui sont couplées à l'organe presseur (84) à côté des zones de coin (96) de l'ouverture d'alimentation (40) ;
- la chambre de compression (44) comprend une paroi avant (56) dans laquelle est formée l'ouverture d'alimentation (40) et qui comprend ou forme l'organe compresseur (84), un dispositif de fermeture (82) étant prévu qui peut être déplacé au moyen d'un un dispositif d'entraînement (76) dans une position ouverte pour faire passer les végétaux dans l'espace de compression (62), et qui ferme l'ouverture d'alimentation (40) dans une position fermée, et la paroi avant (56) pouvant être déplacée au moyen du dispositif d'entraînement (86) pour comprimer les végétaux, le dispositif de fermeture (82) pouvant de préférence être déplacé entièrement ou par segments mobiles individuels (74) transversalement à la direction de fonctionnement (50) pour le transférer de la position fermée à la position ouverte et inversement ;
- le dispositif de liage (102) est un dispositif de cerclage.

9. Dispositif de compression selon l'une des revendications précédentes, **caractérisé en ce qu'**au moins l'un des énoncés suivants s'applique :
- le dispositif de liage (102) est agencé sur la chambre de compression (44), et la balle finale (14) peut être préparée en liant les balles partielles (98) dans la chambre de compression (44) ;
- le dispositif de liage (102) comprend une première unité de liage (104) et une deuxième unité de liage (106), qui peuvent être insérées dans le caisson de compression (66) depuis des côtés opposés, au moins une bande ou un ruban pouvant être mis à disposition sur chaque unité de liage (104, 106), les bandes ou rubans de différentes unités de liage étant reliés les uns aux autres de manière à englober la balle finale (14) ;
- les bandes sont des bandes métalliques pouvant être reliées entre elles par adhérence et/ou par complémentarité de formes ;
- le dispositif de compression (12 ; 110 ; 130) comprend un dispositif de commande (24) pour contrôler les composants actifs du dispositif de compression (12 ; 110 ; 130) ou un système de compression (10) qui comprend le dispositif de compression (12 ; 110 ; 130).

10. Système de compression comprenant un dispositif de compression (12 ; 110 ; 130) selon l'une des revendications précédentes et un dispositif de portionnement (26) disposé en amont du dispositif de compression (12 ; 110 ; 130) dans la direction de fonctionnement (50), par lequel une portion prédéterminée (28) de végétaux est mise à la disposition du dispositif de compression (12 ; 110 ; 130) pour former une balle partielle (98) respective.

11. Système de compression selon la revendication 10, **caractérisé en ce que** la portion prédéterminée (28) de végétaux peut être prédéfinie en termes de volume et/ou de poids et/ou **en ce que** le dispositif de portionnement (26) comprend une unité de compression (30) pour précomprimer la portion prédéterminée (28) de végétaux, en particulier sous la forme d'une pré-balle (32).

12. Système de compression selon la revendication 10 ou 11, **caractérisé en ce que** le système de compression (10) comprend au moins un dispositif de capteur (34) permettant de déterminer au moins l'un des éléments suivants :
- une masse de la portion prédéterminée (28) de végétaux avant l'introduction dans l'espace de compression (62) ;
- une masse d'une balle partielle formée (98) dans la chambre de compression (44) ;
le dispositif de portionnement (26) pouvant, de préférence, être commandé en fonction de la masse déterminée de la balle partielle (98) pour fournir la portion prédéterminée (28) de végétaux, par rapport à une densité moyenne prédéterminée ou prédéterminable des balles finales (14).

13. Système de compression, en particulier selon l'une des revendications 10 à 12, comprenant un dispositif de compression (12 ; 110 ; 130) selon l'une des revendications 1 à 9 et un véhicule (16) de déplacement sur une surface agricole (22), le véhicule (16) comprenant un dispositif de support (42) sur lequel est agencé le dispositif de compression (12 ; 110 ; 130).

14. Système de compression selon la revendication 13, **caractérisé en ce que** le véhicule (16) comprend un entraînement de roulement (18) et/ou **en ce que** le véhicule (16) est conçu pour être autotracté et autodirecteur.

15. Procédé pour mettre à disposition une balle finale avec un dispositif de compression selon l'une des revendications 1 à 9, **caractérisé par** les étapes suivantes :
- Compresser les végétaux pour former une première balle partielle ;
- Compresser les végétaux pour former au moins une autre balle partielle ;
- Relier les balles partielles les unes avec les autres pour former une balle finale.
